# FASCICULE DE BREVET EUROPEEN

(11) **EP 3 479 584 B1**
(45) Date de publication et mention de la délivrance du brevet: **10.04.2024**
(21) Numéro de dépôt: 17731601.5
(22) Date de dépôt: 26.06.2017
(51) Int. Cl.: H04N 21/433, H04N 21/4335, H04N 21/442, H04N 21/45

(54) **PROCEDE DE STOCKAGE D'UN CONTENU MULTIMEDIA, PROCEDE DE LECTURE ASSOCIE ET PROCEDE DE GESTION D'UN ESPACE DE STOCKAGE CONTENANT UN TEL CONTENU**
VERFAHREN ZUR SPEICHERUNG VON MULTIMEDIA INHALT, VERFAHREN ZUM LESEN DES GLEICHEN UND VERFAHREN ZUR VERWALTUNG EINES SPEICHERRAUMES, DER DIESEN INHALT ENTHALTEN
METHOD FOR STORING MULTIMEDIA CONTENT, METHOD FOR READING THE SAME, AND METHOD FOR MANAGING A STORAGE SPACE CONTAINING SUCH CONTENT

(30) Priorité: 01.07.2016 FR 1656324
(43) Date de publication de la demande: 08.05.2019
(73) Titulaire: Sagemcom Broadband SAS, 92270 Bois-Colombes (FR)
(72) Inventeur: SAGOT, Didier, 92500 Rueil Malmaison (FR); BELLANGER, Julien, 92500 Rueil Malmaison (FR)
(74) Mandataire: Cabinet Le Guen Maillet
(86) Numéro de dépôt international: PCT/EP2017/065735
(87) Numéro de publication internationale: WO 2018/001978

(56) Documents cités:
- WO-A1-2011/124810
- WO-A2-2007/078623
- JP-A- 2007 323 566
- US-A1- 2003 235 395
- US-A1- 2005 097 563
- US-A1- 2007 157 281
- US-A1- 2009 100 478
- US-A1- 2011 191 446
- US-A1- 2012 117 103
- US-A1- 2012 309 515
- US-A1- 2015 089 554

## Description

### DOMAINE TECHNIQUE DE L'INVENTION

Le domaine technique est celui des dispositifs de lecture et d'enregistrement de contenus multimédia. Plus particulièrement est décrit ci-après un procédé de stockage d'un contenu multimédia, un procédé de gestion d'un espace de stockage contenant un ou plusieurs contenus multimédia et un procédé de lecture d'un contenu multimédia.

### ARRIERE-PLAN TECHNOLOGIQUE DE L'INVENTION

L'enregistrement d'un contenu multimédia s'est démocratisé durant ces dernières années. Autrefois limité à des supports tels que les DVD ou encore les cassettes VHS, l'enregistrement d'un contenu multimédia s'effectue désormais sur des moyens de stockage de masse tels que des disques durs par exemple. La qualité des flux multimédia a également conduit à un accroissement de la taille des fichiers nécessaires à leur enregistrement. Il est donc indispensable de gérer de manière efficace les espaces de stockage en s'assurant que les contenus multimédias déjà visionnés sont effacés et que les contenus multimédias non visionnés ne sont pas effacés par erreur. En outre, la multiplication des contenus et de leurs origines nécessite désormais des paramètres de lectures différents en fonction du contenu multimédia. Un contenu peut par exemple nécessiter des sous-titres alors qu'un deuxième contenu n'aura pas la même exigence.

Afin de répondre à ces problématiques, il est connu d'associer à chaque contenu multimédia enregistré des données de contexte. Ces données de contexte peuvent par exemple concerner la langue utilisée pour les sous-titres ou bien encore la position de lecture à laquelle la lecture a été stoppée lors du dernier visionnage. Pour chaque contenu multimédia, l'utilisateur peut également demander l'effacement qui ne sera la plupart du temps effectué qu'après une étape de confirmation par l'utilisateur.

De tels systèmes, s'ils conviennent parfaitement à un contexte mono-utilisateur, ne s'adaptent pas de manière efficace au contexte multi-utilisateur pourtant fréquent, un foyer se composant en moyenne de quatre personnes. Dans ce type de contexte, chaque personne peut être amenée à regarder ou à demander l'effacement d'un contenu à un moment différent ou bien encore à arrêter le visionnage à un instant différent. Cela n'est pas sans poser des problèmes de perte de position de lecture pour certains utilisateurs voire d'effacement d'un contenu multimédia non encore visionné.

Afin de limiter les inconvénients précédemment cités, il a été proposé dans le document US 2009 0100478 d'attribuer à chaque utilisateur un quota d'espace de stockage. Ainsi, chaque utilisateur gère ses enregistrements indépendamment des autres utilisateurs. Cependant, cette solution conduit à stocker les mêmes enregistrements plusieurs fois et ne permet donc pas d'optimiser l'espace de stockage. En outre, chaque utilisateur étant géré de manière indépendante, le système ne permet pas de prendre en compte les interactions entre utilisateurs, comme deux utilisateurs qui visionneraient un même contenu multimédia enregistré. Le système, plutôt que de proposer une gestion multi-utilisateur prenant en compte les interactions éventuelles entre les différents utilisateurs, ne propose qu'une pluralité d'environnement mono-utilisateur n'ayant pour seules interaction que les quotas de stockage.

Il existe donc un besoin d'un procédé de lecture et de gestion de contenus multimédia, notamment de l'espace nécessaire à leur stockage, permettant de prendre en charge un contexte multi-utilisateur.

### RESUME DE L'INVENTION

L'invention correspond aux objets des revendications 1 à 14.

L'invention offre une solution aux problèmes évoqués précédemment, en créant lors de l'enregistrement d'un contenu multimédia, pour chaque contenu multimédia, une table d'utilisateurs comprenant, pour chaque utilisateur, des données de contexte associées au contenu multimédia. A l'aide de ces données de contexte, il est possible de gérer le contenu multimédia, et donc l'espace qu'il occupe, en fonction des données de contexte associées à chaque utilisateur pour le contenu multimédia en question.

En outre, il est divulgué - un procédé de stockage d'un contenu multimédia par un dispositif électronique, ledit dispositif comportant une base de données contenant une liste d'utilisateurs et une table des enregistrements, un moyen d'acquisition du contenu multimédia, un moyen de calcul et un moyen de stockage ; ledit procédé de stockage comprenant :
- une première étape d'allocation d'un espace de stockage sur le moyen de stockage ;
- une deuxième étape d'ajout d'une entrée relative au contenu multimédia stocké dans la table des enregistrements ;
- une troisième étape d'acquisition du contenu multimédia et de mémorisation du contenu multimédia dans l'espace de stockage alloué.

Le procédé de stockage divulgué comprend en outre une quatrième étape de création d'une table d'utilisateurs relative au contenu multimédia stocké, ladite table d'utilisateurs comprenant, pour chaque utilisateur d'un sous-ensemble de la liste d'utilisateurs contenue dans la base de données, une ou plusieurs données de contexte.

On entend par sous ensemble une partie au moins des utilisateurs contenus dans la base de données. Bien entendu, ce sous ensemble pourra contenir tous les utilisateurs contenus dans la base de données. Il pourra également ne contenir qu'une partie seulement des utilisateurs contenus dans la base de données, par exemple tous les utilisateurs au-dessus d'un certain âge pour tenir compte de la spécificité d'un contenu multimédia.

Ainsi, chaque contenu multimédia se voit attribuer une table d'utilisateurs comprenant, pour chaque utilisateur, une ou plusieurs données de contexte. Autrement dit, à une table d'utilisateurs correspond un unique contenu multimédia.

Ce procédé de stockage permet donc de mettre en oeuvre une gestion multiutilisateur des contenus multimédia stockés. Cette gestion multiutilisateur ne doit pas être comprise ici comme l'établissement successif de sessions monoutilisateur mais comme l'ouverture d'une session prenant en compte une multitude d'utilisateurs. Cette gestion multiutilisateur permet de prendre en compte les différentes interactions possibles entre les différents utilisateurs que ce soit au niveau du stockage des contenus multimédia, de la lecture des contenus multimédia, ou de la gestion de l'espace de stockage contenant les contenus multimédias. Outre les caractéristiques qui viennent d'être évoquées dans le paragraphe précédent, le procédé de stockage ici divulgué peut présenter une ou plusieurs caractéristiques complémentaires parmi les suivantes, considérées individuellement ou selon toutes les combinaisons techniquement possibles.

Avantageusement, la table d'utilisateurs comprend, pour chaque utilisateur :
- une première donnée de contexte relative à la position de lecture du contenu multimédia, dite position de lecture ; et/ou
- une deuxième donnée de contexte relative à la requête d'enregistrement, dite donnée de requête d'enregistrement, indiquant si l'utilisateur a requis l'enregistrement du contenu multimédia ; et/ou
- une troisième donnée de contexte relative à la requête d'effacement, dite donnée de requête d'effacement, indiquant si l'utilisateur a requis l'effacement du contenu multimédia; et/ou
- une quatrième donnée de contexte relative à la requête de verrouillage, dite donnée de requête de verrouillage, indiquant si l'utilisateur a requis le verrouillage du contenu multimédia.

De préférence, l'étape de création d'une table d'utilisateurs et l'initialisation des première, deuxième, troisième et/ou quatrième données de contexte de la table d'utilisateurs se fait lors de la deuxième étape d'ajout d'une entrée relative au contenu multimédia dans la table des enregistrements.

Avantageusement, lorsque le contenu multimédia est en cours de visionnage par au moins un utilisateur lors de l'étape d'acquisition et de mémorisation dudit contenu multimédia, le procédé comprend :
- une étape d'identification de l'utilisateur ;
- à l'arrêt du visionnage dudit contenu multimédia, une étape de mise à jour des données de contexte dudit utilisateur dans la table d'utilisateurs associée audit contenu multimédia.

Ainsi le procédé permet de tenir compte du fait qu'un utilisateur a visionné au moins en partie ledit contenu multimédia lors de son acquisition et de sa mémorisation par l'intermédiaire des données de contextes.

Il est aussi divulgué un procédé de gestion d'un espace de stockage par un dispositif électronique, ledit dispositif comportant une base de données contenant une liste d'utilisateurs et une table des enregistrements, un moyen de calcul et un moyen de stockage, ledit moyen de stockage contenant aux moins un contenu multimédia stocké à l'aide d'un procédé de stockage ainsi que la table d'utilisateurs associée audit contenu multimédia, ledit procédé comprenant:
- une étape de saisie d'un ordre d'effacement d'un contenu multimédia,
- une étape d'analyse des données de contexte de la table d'utilisateurs associée audit contenu multimédia ;
- une étape d'effacement effective du contenu multimédia, ledit effacement étant conditionné par l'étape d'analyse des données de contexte.

Avantageusement, l'étape d'effacement effective du contenu multimédia comprend :
- une première sous-étape de libération de l'espace de stockage alloué au contenu multimédia ;
- une deuxième sous-étape d'effacement de la table d'utilisateur associée au contenu multimédia ;
- une troisième sous-étape d'effacement de l'entrée associée au contenu multimédia dans la table des enregistrements.

Ainsi, la gestion de l'espace de stockage s'effectue en prenant en compte, pour chaque contenu multimédia, l'ensemble des utilisateurs de la table d'utilisateurs associée audit contenu multimédia. En effet, pour chaque suppression d'un contenu multimédia, le procédé analyse la table d'utilisateurs associée au contenu multimédia à supprimer. Cette table utilisateurs comprenant pour le contenu multimédia à supprimer les données de contexte associées à chaque utilisateur de la table d'utilisateurs, il est possible de prendre en compte les données de contexte associées à chaque utilisateur avant de procéder à l'effacement effectif.

On entend par effacement effectif, un effacement libérant l'espace de stockage alloué au contenu multimédia. Il est désigné comme effectif par opposition à un effacement qui fait disparaitre un contenu multimédia d'une liste de sélection pour un utilisateur donné, sans pour autant libérer l'espace de stockage associé au contenu multimédia. Ainsi, dans le cas d'un effacement d'un contenu multimédia, le contenu multimédia pourra apparaitre comme étant effacé pour un utilisateur et comme non-effacé pour un second utilisateur et l'espace de stockage alloué au contenu multimédia ne sera pas libéré. En revanche, dans le cas d'un effacement effectif, le contenu multimédia apparaitra comme effacé pour l'ensemble des utilisateurs et l'espace de stockage alloué au contenu multimédia sera libéré.

Avantageusement, le procédé de gestion d'un espace de stockage comprend, avant l'étape de saisie d'un ordre d'effacement, une étape d'indentification d'un utilisateur, l'étape de saisie d'un ordre d'effacement étant effectuée par l'utilisateur identifié.

Avantageusement, le procédé de gestion d'un espace de stockage comprend entre l'étape de saisie d'un ordre d'effacement et l'étape d'analyse des données de contexte, une étape de mise à jour des données de contexte associées à l'utilisateur ayant saisi l'ordre d'effacement dans la table d'utilisateurs associée au contenu multimédia sélectionné.

Avantageusement, la liste d'utilisateurs comprend, pour chaque utilisateur, une ou plusieurs données de communication correspondant à des moyens de communication et le procédé comprend, après l'étape d'analyse des données de contexte et lorsqu'un ou plusieurs utilisateurs de la table d'utilisateur associée au contenu multimédia sélectionné n'ont pas requis l'effacement et/ou ont requis le verrouillage dudit contenu multimédia, une étape d'envoi d'un message auxdits utilisateurs à l'aide desdites données de communication.

Avantageusement, l'étape d'analyse des données de contexte comprend une sous étape de vérification, pour chacun des utilisateurs de la table d'utilisateurs associée au contenu multimédia sélectionné, de la donnée de requête d'effacement dans la table d'utilisateurs associée au contenu multimédia sélectionné, l'étape d'effacement effectif n'ayant lieu que lorsque chaque utilisateur de la table d'utilisateurs associée au contenu multimédia sélectionné a requis l'effacement dudit contenu.

Ainsi, la suppression d'un contenu multimédia n'est effective que si l'ensemble des utilisateurs de la table d'utilisateurs en a fait la requête. Il est donc possible de prendre en compte les interactions entre les différents utilisateurs dans la gestion du stockage des contenus multimédia. Cette gestion se fait à l'échelle de chaque contenu multimédia par l'intermédiaire de la table utilisateurs qui lui est associée, chaque contenu multimédia étant associé à une unique table d'utilisateurs et chaque table d'utilisateurs étant associée à un unique contenu multimédia. Il est donc possible d'effectuer une gestion très fine de l'espace de stockage.

Avantageusement, l'étape d'analyse des données de contexte comprend une deuxième sous-étape de vérification, pour chacun des utilisateurs de la table d'utilisateurs associée au contenu multimédia, de la donnée de requête de verrouillage dans la table d'utilisateurs associée au contenu multimédia sélectionné, l'étape d'effacement effectif n'ayant lieu 10 que lorsque chaque utilisateur de la table d'utilisateurs associée au contenu multimédia sélectionné a requis l'effacement dudit contenu et qu'aucun utilisateur de la table d'utilisateurs associée au contenu multimédia sélectionné n'a requis le verrouillage dudit contenu.

Ainsi, un utilisateur peut s'opposer à l'effacement effectif du contenu multimédia en verrouillant ledit contenu.

Comme indiqué précédemment, un -aspect de l'invention concerne un procédé de lecture d'un contenu multimédia par un dispositif électronique, ledit dispositif comportant une base de données contenant une liste d'utilisateurs et une table des enregistrements, un moyen de calcul et un moyen de stockage, ledit moyen de stockage contenant aux moins un contenu multimédia stocké à l'aide d'un procédé de stockage selon l'invention ainsi que la table d'utilisateurs associée audit contenu multimédia, ledit procédé comprenant :
- une étape d'identification d'un utilisateur ;
- une étape de sélection par l'utilisateur identifié d'un contenu multimédia ;
- une étape de déclenchement de la lecture du contenu multimédia sélectionné, les paramètres de lecture dépendant des données de contexte associées à l'utilisateur identifié et contenues dans la table d'utilisateurs.

Ainsi, le procédé de lecture prend en compte les données de contexte afin d'adapter l'étape de déclenchement de la lecture à ces dernières.

Outre les caractéristiques qui viennent d'être évoquées dans le paragraphe précédent, le procédé de lecture selon l'invention peut présenter une ou plusieurs caractéristiques complémentaires parmi les suivantes, considérées individuellement ou selon toutes les combinaisons techniquement possibles.

Avantageusement, l'étape de déclenchement de la lecture est précédée d'une étape de création d'une table d'utilisateur regardant, l'utilisateur identifié étant ajouté à ladite table d'utilisateurs regardant lors de la création de ladite table d'utilisateurs regardant.

Ainsi, la table d'utilisateurs regardant permet d'assurer un suivi des utilisateurs visionnant le contenu multimédia en cours de lecture. Comme nous le verrons dans la suite, cette dernière peut être mise à jour en cours de visionnage et permet donc de faciliter la gestion multiutilisateur de la lecture.

Avantageusement, les données de contexte comprennent la position de lecture et les paramètres de lecture de l'étape de déclenchement de la lecture incluent ladite position.

Ainsi, le procédé de lecture prend en compte la position de lecture extraite des données de contexte et permet d'adapter le début de la lecture du contenu multimédia à cette donnée de contexte. En outre, l'étape d'identification permet d'effectuer cette adaptation à l'échelle d'un utilisateur.

De préférence, l'étape d'identification est effectuée sur une pluralité d'utilisateurs, l'étape de sélection est réalisée par un utilisateur de la pluralité d'utilisateurs, la pluralité d'utilisateurs identifiée est ajoutée à la liste d'utilisateurs regardant et les paramètres de lecture de l'étape de déclenchement de la lecture dépendent des données de contexte associées à la pluralité d'utilisateurs identifiés et contenues dans la table d'utilisateurs.

Ainsi, il est possible d'assurer la gestion multiutilisateur au travers d'une session multiutilisateur.

Avantageusement, les données de contexte comprennent la position de lecture, les paramètres de lecture incluent ladite position de lecture ; et l'étape de déclenchement est précédé de :
- une étape de comparaison de la position de lecture de chaque utilisateur de la pluralité d'utilisateurs à la position de lecture des autres utilisateurs de la pluralité d'utilisateurs ;
- lorsque la position de lecture est identique pour tous les utilisateurs, une étape d'initialisation de la position de lecture à la valeur de la position de lecture commune à tous les utilisateurs.

Avantageusement, lorsqu'au moins un utilisateur a une position de lecture différente des autres utilisateurs de la pluralité d'utilisateurs, le procédé de lecture comprend :
- une étape d'affichage d'un menu permettant de sélectionner une position de lecture parmi l'ensemble des positions de lecture de la pluralité d'utilisateurs ;
- une étape d'initialisation de la position de lecture à la valeur sélectionnée.

Ainsi, le procédé de lecture prend en compte la position de lecture lors d'une session multiutilisateur. Cette gestion d'une session multiutilisateur n'est rendue possible que par l'utilisation de la table d'utilisateurs utilisés lors de l'étape de déclenchement de la lecture et par l'étape d'identification de la pluralité d'utilisateurs.

Avantageusement, le procédé de lecture comprend une deuxième étape identification des utilisateurs durant la lecture du contenu multimédia, ladite deuxième étape étant répétée à intervalles réguliers durant la lecture.

Ainsi, les utilisateurs visionnant le contenu multimédia sont identifiés régulièrement et un changement dans l'identité de ces utilisateurs peut être détecté et pris en compte par le procédé de lecture. Autrement dit, lorsqu'un ou plusieurs utilisateurs arrivent alors qu'un contenu multimédia est en cours de lecture, ces derniers sont identifiés au cours de l'occurrence de la deuxième étape de détection suivant leur arrivée. De même, lorsqu'un utilisateur était présent lors de l'étape deuxième étape identification précédente mais que ce dernier n'est plus présent lors de l'occurrence suivante de ladite deuxième étape, alors ce dernier est identifié comme n'étant plus en cours de lecture. Le procédé pourra donc gérer de manière dynamique le départ et l'arrivée de nouveaux utilisateurs.

Avantageusement, le procédé comprend, lorsqu'un utilisateur identifié lors de la deuxième étape d'identification n'est pas dans la liste d'utilisateurs regardant :
- une étape d'affichage d'un menu permettant à l'utilisateur identifié de conserver la position de lecture contenue dans la table d'utilisateurs ou de réinitialiser cette position de lecture à la valeur de la position de lecture courante ;
- lorsque l'utilisateur identifié choisi de réinitialiser la position de lecture,
une étape d'ajout de l'utilisateur à la table des utilisateurs regardant.

On entend par position courante de lecture, la position de lecture à l'instant considéré. Par exemple, lorsque l'on considère la position courante de lecture lors de l'étape d'identification, la valeur de la position courante de lecture est égale à la position de lecture au moment où l'étape d'identification est mise en oeuvre.

De manière alternative, le procédé comprend, lorsqu'un utilisateur identifié lors de la deuxième étape d'identification n'est pas dans la liste d'utilisateurs regardant :
- une étape de vérification de la donnée de requête d' effacement relative à l'utilisateur identifié et contenues dans la table d'utilisateurs relative au contenu multimédia en cours de lectures ;
- lorsque l'utilisateur n'a pas demandé l'effacement du contenu en cours de lecture, une étape de vérification de la position de lecture contenue dans la table des utilisateurs relative au contenu multimédia en cours de lectures ;
- lorsque cette position de lecture est antérieure à la position de lecture courante :
   - une première sous-étape d'affichage d'un menu permettant à l'utilisateur de conserver la position de lecture contenue dans la table d'utilisateurs ou de réinitialiser cette position de lecture à la valeur de la position de lecture courante ;
   - lorsque l'utilisateur choisi de réinitialiser la position de lecture, une deuxième sous-étape d'ajout de l'utilisateur à la table des utilisateurs regardant.

Avantageusement, le procédé comprend, lorsque la position de lecture de l'utilisateur identifié est postérieure à la position de lecture courante :
- une première sous-étape d'initialisation de la position de lecture de l'utilisateur à la valeur de la position de lecture courante ;
- une deuxième sous-étape d'ajout de l'utilisateur à la table des utilisateurs regardant.

De préférence, le procédé comprend, lorsqu'un utilisateur de la table d'utilisateurs regardant n'est pas identifié lors de la deuxième étape d'identification :
- une première étape de mise à jour de la position de lecture dudit utilisateur, ladite position de lecture étant réinitialisée à la position de lecture du contenu multimédia lors de la deuxième étape d'identification ;
- une deuxième étape de suppression de l'utilisateur de la table des utilisateurs regardant.

Ainsi, les données de contexte sont mises à jour en fonction du départ et de l'arrivées d'utilisateurs.

Avantageusement, le procédé de lecture comprend
- une étape d'arrêt de la lecture ;
- une étape de réinitialisation de la position de lecture pour les utilisateurs de la table d'utilisateurs regardant, la position de lecture étant réinitialisée à une valeur égale à la position de lecture au moment de l'arrêt de la lecture.

Avantageusement, l'étape de réinitialisation de la position de lecture est suivie d'une étape de modification de l'espace alloué, l'espace alloué ainsi modifié ne conservant que la partie du contenu multimédia située à partir de la position de lecture la moins élevée parmi les positions de lecture la table d'utilisateurs associée audit contenu multimédia.

Ainsi, l'espace de stockage est optimisé en supprimant la partie du contenu multimédia que l'ensemble des utilisateurs de la table d'utilisateurs associée audit contenu multimédia a déjà vue.

De manière alternative ou complémentaire, l'étape de réinitialisation de la position de lecture est suivie :
- d'une étape de saisie, par un utilisateur parmi les utilisateurs regardant, d'une première position de lecture, dite position de début effectif, et d'une deuxième position de lecture, dite position de fin effective ;
- d'une étape de modification de l'espace alloué, l'espace alloué ainsi modifié ne conservant que la partie du contenu multimédia située entre la position de début effectif et la position de fin effective.

Ainsi, lorsque l'enregistrement du contenu multimédia a débuté alors que l'évènement d'intérêt n'a pas débuté ou bien lorsque l'enregistrement s'est poursuivi alors que l'évènement d'intérêt lui-même était terminé, l'espace alloué est modifié de sorte à ne conserver que la partie du contenu multimédia concernant l'évènement d'intérêt.

Avantageusement, lorsque l'espace alloué au contenu multimédia est modifié, le procédé comprend en outre, à l'issue de cette étape de modification, une étape de modification des positions de lecture contenues dans la table d'utilisateur associée audit contenu multimédia de sorte à prendre en compte ladite modification.

L'invention concerne également un dispositif électronique comportant une base de données contenant une liste d'utilisateurs et une table des enregistrements, un moyen de calcul, un moyen d'acquisition et un moyen de stockage, le dispositif étant configuré pour mettre en oeuvre le procédé de lecture tel que décrit précédemment.

L'invention concerne également un produit programme d'ordinateur comprenant des instructions qui conduisent le dispositif décrit précédemment à exécuter les étapes du procédé de lecture tel que décrit précédemment.

L'invention concerne en outre un support lisible par ordinateur, sur lequel est enregistré le programme d'ordinateur tel que décrit précédemment.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un dispositif électronique
- La figure 2 montre un ordinogramme d'un procédé de stockage.
- La figure 3 illustre la relation entre les utilisateurs, un contenu multimédia et une table d'utilisateur contenant les données de contexte.
- La figure 4 montre un ordinogramme d'un premier mode de réalisation d'un procédé de gestion de l'espace de stockage 5.
- La figure 5 montre un ordinogramme d'un deuxième mode de réalisation d'un procédé de gestion de l'espace de stockage.
- La figure 6 montre un ordinogramme d'un premier mode de réalisation d'un procédé de lecture.
- La figure 7 montre un ordinogramme d'un second mode de réalisation d'un procédé de lecture selon un aspect de l'invention.
- La figure 8 montre un ordinogramme d'un troisième mode de réalisation d'un procédé de lecture selon un aspect de l'invention.
- La figure 9 montre un ordinogramme d'un quatrième mode de réalisation d'un procédé de lecture selon un aspect de l'invention.
- La figure 10 montre un ordinogramme d'un cinquième mode de réalisation d'un procédé de lecture selon un aspect de l'invention.
- La figure 11 montre un ordinogramme d'un sixième mode de réalisation d'un procédé de lecture selon un aspect de l'invention.

### DESCRIPTION DETAILLEE D'AU MOINS UN MODE DE REALISATION DE L'INVENTION

Sauf précision contraire, un même élément apparaissant sur des figures différentes présente une référence unique.

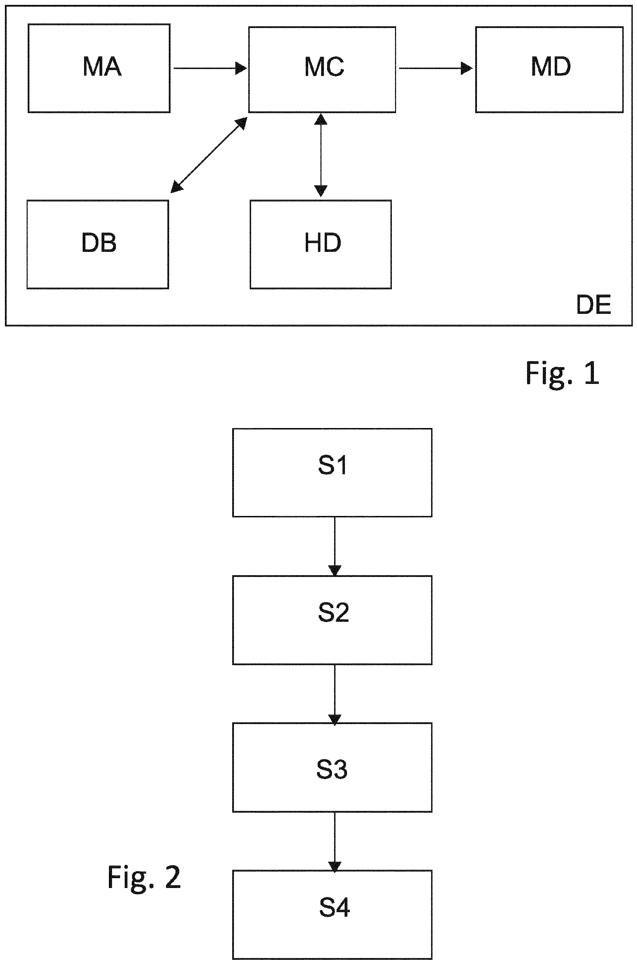

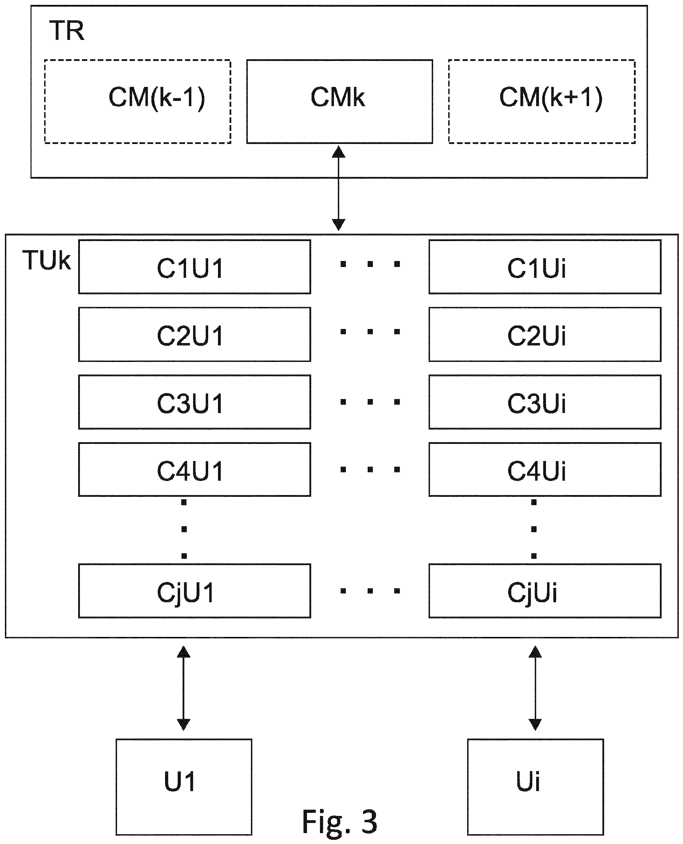

Il est divulgué aux figures 1 à 3 un procédé de stockage d'un contenu multimédia CMk mis en oeuvre par un dispositif électronique DE. Le dispositif électronique DE peut par exemple consister en un dispositif de boitier décodeur (set-top box en anglais). Le dispositif électronique DE comprend une base de données DB contenant une liste d'utilisateurs Ui et une table des enregistrements TR. La base de données peut par exemple prendre la forme d'une base de données de type SQL ou bien encore NOSQL.

Le dispositif comporte également un moyen d' acquisition MA du contenu multimédia CMk. Cette acquisition peut par exemple se faire par l'intermédiaire d'une carte d'acquisition ou bien encore par une connexion à un réseau informatique. Le dispositif électronique peut également comprendre un moyen de calcul MC, par exemple un processeur ou bien encore 10 un circuit logique programmable (ou FPGA pour Field-Programmable Gate Array en anglais). Le moyen de calcul MC peut être associé à une mémoire contenant un programme d'ordinateur comprenant des instructions qui conduisent le dispositif électronique DE à exécuter les étapes du procédé de stockage d'un contenu multimédia CMk (mais également d'un procédé de gestion d'un espace de stockage ou d'un procédé de lecture d'un contenu multimédia CMk tels qu'ils seront décrits dans la suite). Le dispositif comprend également un moyen de stockage HD, par exemple un disque dur ou un moyen de stockage dans le nuage (ou Cloud en anglais). Le dispositif électronique DE peut également comporter un moyen de diffusion MD permettant de diffuser un contenu multimédia CMk au préalable enregistré sur un moyen d'affichage. Ce moyen de diffusion MD peut par exemple prendre la forme d'un puce graphique comportant un port de sortie afin d'être connectée à un moyen d'affichage tel qu'un écran. Le moyen de diffusion MD peut également prendre la forme d'une connexion réseau diffusant le contenu multimédia CMk, ce dernier étant alors diffusé sur des terminaux déportés tel que des ordiphones (ou Smartphone en anglais) ou des tablettes numériques.

Le moyen de calcul MC est apte à extraire des données de la base de données DB ou bien encore à enregistrer des données dans ladite base de données DB. Le moyen de calcul MC est également apte à lire ou écrire des données sur le moyen de stockage HD ou bien encore diffuser un contenu multimédia CMk stocké sur le moyen de stockage HD par l'intermédiaire du moyen de diffusion MD. Le moyen de calcul MC est également apte à mémoriser un contenu multimédia CMk acquis par le moyen d'acquisition MA dans un espace de stockage alloué sur le moyen de stockage HD. De manière générale, les étapes d'acquisition et de mémorisation sont effectuées simultanément, le contenu multimédia CMk étant mémorisé au fur et à mesure de l'acquisition.

Le procédé de stockage divulgué comprend une première étape S1 d'allocation d'un espace de stockage sur le moyen de stockage HD par le moyen de calcul MC. Le procédé comprend également une deuxième étape S2 d'ajout du contenu multimédia CMk à la table des enregistrements TR. Le procédé comprend en outre une troisième étape S3 d'acquisition et de mémorisation du contenu multimédia CMk dans l'espace alloué. Lors de cette étape, le contenu multimédia est donc mémorisé au fur et à mesure de son acquisition et les processus d'acquisition et de mémorisation sont donc simultanés. De plus, le procédé comprend une quatrième étape S4 de création d'une table d'utilisateurs TUk relative au contenu multimédia CMk stocké. La table d'utilisateurs TUk comprend, pour chaque utilisateur Ui d'un sous-ensemble de la liste d'utilisateurs contenue dans la base de données DB, une ou plusieurs données de contexte CjUi.

Le sous ensemble de la liste des utilisateurs peut comprendre une partie au moins des utilisateurs Ui contenus dans la base de données DB. De manière alternative, le sous ensemble peut comprendre tous les utilisateurs Ui contenus dans la base de données DB. Par exemple, le sous ensemble peut contenir tous les utilisateurs Ui au-dessus d'un certain âge pour tenir compte de la spécificité d'un contenu multimédia CMk. Dans ce cas-là, la base de données DB comporte également pour chaque utilisateur Ui une donnée concernant l'âge dudit utilisateur Ui.

Les données de contextes CjUi peuvent concerner plusieurs aspects du contenu multimédia CMk. Ces données de contexte CjUi fournissent un contexte adapté à chaque contenu multimédia CMk de la table des enregistrements TR et ce pour chaque utilisateur Ui. Autrement dit, chaque contenu multimédia CMk de la table des enregistrements TR est associé à une table d'utilisateurs TUk. Cette table d'utilisateurs TUk comprend, pour chaque utilisateur Ui, des données de contexte CjUi et permet donc d'associer pour chaque contenu multimédia CMk, un utilisateur Ui à des données de contexte CjUi. Il est ainsi possible de personnaliser les données de contexte CjUi associé à un contenu multimédia 5 CMk pour chaque utilisateur Ui.

Dans un mode de réalisation, les données de contexte CjUi comprennent, pour chaque utilisateur Ui, une première donnée de contexte C1Ui relative à la position de lecture du contenu multimédia, dite position de lecture. Comme il sera montré dans la suite, cette donnée de contexte C1Ui permet notamment d'adapter la position de lecture à l'utilisateur Ui.

Les données de contexte CjUi comprennent une deuxième donnée de contexte C2Ui relative à la requête d'enregistrement, dite donnée de requête d'enregistrement, indiquant si l'utilisateur Ui a requis l'enregistrement du contenu multimédia CMk. Dans un mode de réalisation, les données de contexte CjUi comprennent une troisième donnée de contexte C3Ui relative à la requête d'effacement, dite donnée de requête d'effacement, indiquant si l'utilisateur Ui a requis l'effacement du contenu multimédia CMk. Dans un mode de réalisation, les données de contexte CjUi comprennent une quatrième donnée de contexte C4Ui relative à la requête de verrouillage, dite donnée de requête de verrouillage, indiquant si l'utilisateur Ui a requis le verrouillage du contenu multimédia CMk. Comme il sera montré dans la suite, ces données de contexte CjUi permettent de gérer de manière efficace l'espace de stockage tout en prenant en compte les différentes interactions entre les différents utilisateurs Ui.

L'initialisation des première C1Ui, deuxième C2Ui, troisième C3Ui et/ou quatrième C4Ui données de contexte de ladite table TUk se fait lors de la deuxième étape S2 d'ajout d'une entrée relative au contenu multimédia CMk dans la table des enregistrements TR. Par exemple, la position de lecture C1Ui est initialisée à zéro, c'est-à-dire au début du contenu multimédia CMk. Dans un mode de réalisation, la donnée de requête d'enregistrement C2Ui, la donnée de requête d'effacement C3Ui et la donnée de requête de verrouillage C4Ui sont des données booléennes, lesdites données booléennes étant initialisées à la valeur « Non ».

Lorsqu'un ou plusieurs utilisateurs Ui sont en cours de visionnage du contenu multimédia CMk lors de l'étape d'acquisition et de mémorisation dudit contenu multimédia CMk dans l'espace de stockage HD alloué, le procédé comprend, lorsque le visionnage prend fin, par exemple sur requête d'un utilisateur Ui, une étape de mise à jour des données de contexte dudit ou desdits utilisateurs Ui dans table d'utilisateurs TUk associé au contenu multimédia CMk visionné. Autrement dit, lorsqu'un ou plusieurs utilisateurs Ui de la pluralité des utilisateurs est en cours de visionnage du contenu multimédia CMk par ailleurs en cours d'enregistrement, les données de contextes CjUi dudit ou desdits utilisateurs Ui sont adaptées en conséquence. Par exemple, la position de lecture pourra être initialisée en fonction de la position de lecture lors de l'arrêt du visionnage. Ainsi, les données de contexte de l'utilisateur Ui concernant le contenu multimédia CMk prendront en compte le fait que le ou les utilisateurs Ui ont déjà visionné au moins une partie dudit contenu multimédia CMk.

La table des enregistrements TR comprend, pour chaque contenu multimédia CMk, le nom du contenu multimédia CMk, l'origine du contenu multimédia CMk, la date et l'heure de diffusion du contenu multimédia CMk, la durée du contenu multimédia CMk, l'état du contenu multimédia CMk ainsi qu'un lien vers l'espace mémoire du moyen de stockage HD contenant le contenu multimédia CMk. Ces différentes données peuvent être mise à jour lors de l'étape S3 d'acquisition et de mémorisation, par exemple pour prendre en compte l'évolution de la durée du contenu multimédia CMk en cours d'acquisition et de mémorisation.

La liste d'utilisateurs comprend, pour chaque utilisateur Ui, une ou plusieurs données correspondant à des moyens de communication permettant un échange avec ledit utilisateur Ui. Ces données peuvent par exemple comprendre un numéro de téléphone, une adresse courriel et/ou un identifiant d'un réseau social ou de plusieurs réseaux sociaux. Ces informations peuvent alors être utilisées afin de communiquer des informations utiles associées à chaque contenu multimédia à chaque utilisateur Ui. Ces données peuvent être saisies à la création de chaque utilisateur Ui ou être mises à jour après ladite création. Dans ce cas, le dispositif électronique DE comprend des moyens pour, à partir de ces informations, communiquer avec les utilisateurs Ui contenu dans la liste d'utilisateurs.

La base de données DB comporte une liste de trois utilisateurs : un premier utilisateur U1, un deuxième utilisateur U2 et un troisième utilisateur U3. Dans cet exemple d'utilisation, le premier utilisateur U1 a demandé l'enregistrement du contenu multimédia CM1. Une fois l'enregistrement débuté, c'est-à-dire à l'issue de la première étape d'allocation d'un espace de stockage sur le moyen de stockage, une entrée est créée dans la table des enregistrements afin d'ajouter à ladite table le contenu multimédia CM1. Une telle entrée est illustrée dans le tableau 1. Cette dernière comprend le nom du contenu multimédia, l'origine du contenu multimédia, la date et l'heure de diffusion du contenu multimédia, la durée du contenu multimédia, l'état du contenu multimédia ainsi qu'un lien vers l'espace mémoire du moyen de stockage contenant le contenu multimédia, ici présent sous la forme d'un lien vers un fichier. L'enregistrement, ou autrement dit l'étape S3 d'acquisition et de mémorisation, étant en cours, la donnée relative à l'état prend ici la valeur « en cours ».

**Tableau 1**

| **Nom** | **Origine** | **Date et heure** | **Durée** | **Etat** | **Espace mémoire** |
|---|---|---|---|---|---|
| CM1 | Chaine 1 | aa-mm-jj hh-mm | hh :mm :ss | « en cours » | fichier |

Une fois le contenu multimédia CM1 ajouté à la table des enregistrements, une table d'utilisateurs comprenant des données de contexte associées à chaque utilisateur pour ledit contenu multimédia CM1 est créée et initialisée. Les données de contexte CjUi comprennent une donnée de contexte relative à une position de lecture, une donnée de contexte relative à une requête d'effacement et une donnée de contexte relative à une requête de verrouillage. A l'issue l'étape S3 5 d'acquisition et de mémorisation du contenu multimédia CMk, il est possible d'effectuer une mise à jour des données concernant le contenu multimédia CMk dans la table des enregistrements TR, par exemple en modifiant l'état de la valeur « en cours » à la valeur « terminé ». Un tel exemple de réalisation est illustré dans le tableau 2. Il est en outre possible d'effectuer une telle mise à jour au cours de l'étape S3 d'acquisition et de mémorisation comme cela a déjà été précisé précédemment.

**Tableau 2**

| **Nom** | **Origine** | **Date et heure** | **Durée** | **Etat** | **Espace mémoire** |
|---|---|---|---|---|---|
| CM1 | Chaine 1 | aa-mm-jj hh-mm | hh :mm :ss | « terminé » | fichier |

Comme expliqué précédemment, une table d'utilisateurs TU1 a été créée et contient les données de contexte CjUi. Dans cet exemple de réalisation, tous les utilisateurs Ui de la base de données DB sont présents dans la table d'utilisateurs TU1 relative au contenu multimédia CM1. La table d'utilisateurs TU1 est illustrée dans le tableau 3.

**Tableau 3**

| **Utilisateur** | **Requête d'enregistrement** | **Position de lecture** | **Requête d'effacement** | **Requête de verrouillage** |
|---|---|---|---|---|
| U1 | Oui | 00 :00 :00 | Non | Non |
| U2 | Non | 00 :00 :00 | Non | Non |
| U3 | Non | 00 :00 :00 | Non | Non |

Dans la table d'utilisateurs TU1 du tableau 3, la donnée de requête d'enregistrement C2Ui est initialisée à « Oui » pour le premier utilisateur U1, ce dernier ayant requis l'enregistrement et à « Non » pour le deuxième utilisateur U2 et le troisième utilisateur U3, ces derniers n'ayant pas requis l'enregistrement. Aucun des utilisateurs Ui n'ayant encore visionné le contenu multimédia CM1, la position de lecture C1Ui est initialisée à « 00 :00 :00 ». De même, aucun utilisateur Ui n'ayant requis l'effacement ou le verrouillage du contenu multimédia CM1, les données de contexte correspondantes C3Ui, C4Ui sont initialisées à « Non ». Il ne s'agit ici que d'un exemple de mise en oeuvre d'un procédé de stockage. On peut en effet envisager la présence de données de contexte CjUi supplémentaires tels que la langue des sous-titres ou bien encore le volume sonore. Les données de contexte peuvent être initialisées à une valeur par défaut, par exemple au moyen d'un profil utilisateur créé auparavant par chaque utilisateur et précisant la valeur par défaut à prendre pour chaque donnée de contexte ou pour seulement une partie d'entre elles. On peut également envisager d'autres choix concernant l'initialisation des données de contexte CjUi.

Le contenu multimédia CMk enregistré à l'aide du procédé de stockage occupe un espace de stockage qui peut parfois être difficile à gérer, les interactions entre les différents utilisateurs Ui pouvant être nombreuses. Cependant, le procédé de stockage, en associant à chaque contenu multimédia CMk une table d'utilisateurs TUk et à chaque table d'utilisateurs TUk un contenu multimédia unique CMk, permet de faciliter la gestion de l'espace de stockage.

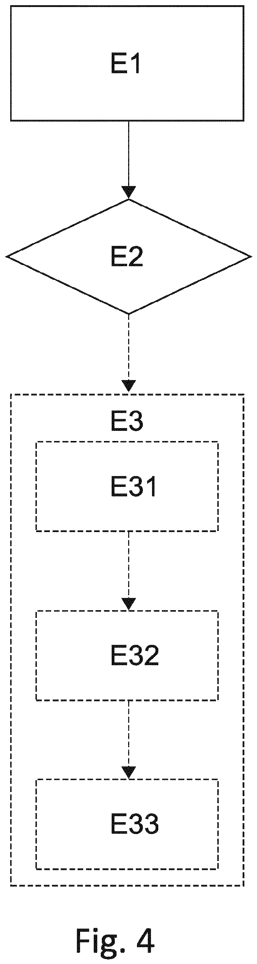

Il est aussi divulgué -un procédé de gestion d'un espace de stockage, l'espace de stockage comportant au moins un contenu multimédia CMk enregistré à l'aide d'un procédé de stockage. Plus particulièrement, dans un mode de réalisation illustré à la figure 4, le procédé de gestion d'un espace de stockage comprend une étape E1 de saisie d'un ordre d'effacement d'un contenu multimédia CMk. Cette étape de saisie peut être effectuée par sélection du contenu multimédia CMk à effacer dans une liste de contenus multimédia CMk, ladite liste étant générée en fonction des données de contexte CjUi associées à chaque contenu multimédia CMk. Le procédé comprend en outre une étape E2 d'analyse des données de contexte CjUi de la table d'utilisateurs TUk associée audit contenu multimédia CMk. Le procédé comprend également une étape E3 d'effacement effectif du contenu multimédia CMk, ledit effacement étant conditionné par l'étape E2 d'analyse des données de contexte CjUi.

Le procédé de gestion de stockage analyse donc les données de contexte CjUi d'un contenu multimédia CMk avant d'éventuellement effectuer l'effacement. L'étape E3 n'est donc pas toujours mise en oeuvre et son exécution dépend de la valeur des données de contexte CjUi associées au contenu multimédia CMk.

L'étape E3 d'effacement effectif comprend :
- une première sous-étape E31 de libération de l'espace de stockage alloué au contenu multimédia CMk ;
- une deuxième sous-étape E32 d'effacement de la table d'utilisateur TUk associée au contenu multimédia CMk ;
- une troisième sous-étape E33 d'effacement du contenu multimédia CMk de la table des enregistrements.

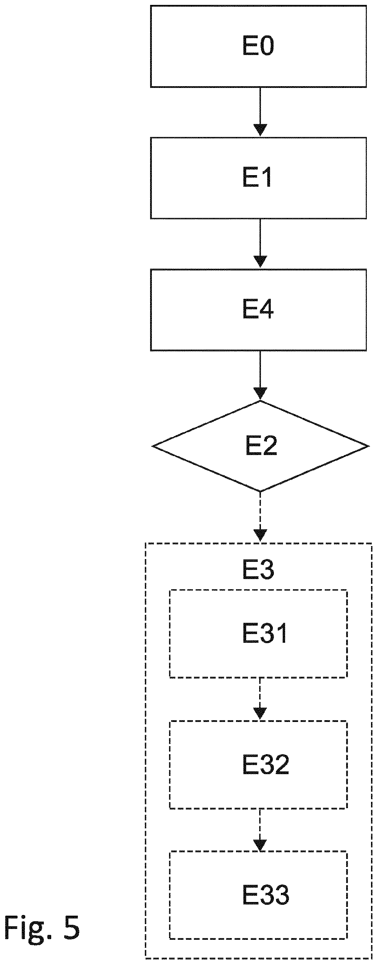

Tel qu' illustré à la figure 5, le procédé de gestion de l'espace de stockage comprend une étape E0 d'indentification d'un utilisateur Ui. L'étape E0 d'identification d'un utilisateur Ui peut être effectuée par un procédé de reconnaissance faciale, le dispositif électronique DE comprenant alors des moyens d'identification par reconnaissance faciale. Alternativement, l'utilisateur Ui peut s'identifier au moyen d'une télécommande couplée au dispositif électronique DE, ce dernier étant alors équipé des moyens pour recevoir des instructions en provenance de ladite télécommande. Par exemple, la télécommande peut comporter des touches de couleurs différentes, chaque utilisateur Ui étant associé à une couleur différente et chaque utilisateur Ui pouvant s'identifier en appuyant sur la touche qui lui est associée. L'utilisateur Ui peut également s'identifier au moyen d'un ordiphone (ou smartphone en anglais), le dispositif électronique DE comportant alors des moyens pour communiquer avec ledit ordiphone, par exemple un moyen de connexion Bluetooth ou Wifi. Il ne s'agit ici que d'exemples et tout autre moyen d'identification peut être envisagé.

Le procédé comprend en outre une étape E1 de saisie d'un ordre d'effacement d'un contenu multimédia CMk par l'utilisateur Ui identifié. Cette étape de saisie peut être effectuée par sélection d'un contenu multimédia CMk dans une liste de contenus multimédia. Cette liste de contenus multimédia peut être obtenue en affichant les contenus multimédia CMk de la table des enregistrements TR pour lesquels l'utilisateur Ui identifié n'a pas encore requis l'effacement. Autrement dit, la liste proposée à l'utilisateur Ui identifié ne comporte pas tous les contenus multimédia CMk de la table des enregistrements TR mais uniquement les contenus multimédia CMk non-effacés par l'utilisateur Ui identifié. Les données de contexte CjUi sont donc également utilisées pour générer la liste de contenu multimédia CMk proposée à l'utilisateur Ui pour l'étape E1 de saisie d'un ordre d'effacement. Le procédé comprend également une étape E4 de mise à jour, pour l'utilisateur Ui ayant saisi l'ordre d'effacement, de la donnée de requête d'effacement C3Ui dans la table d'utilisateurs TUk relative au contenu multimédia CMk sélectionné. Le procédé met ensuite en oeuvre l'étape E2 d'analyse des données de contexte.

Dans un mode de réalisation, l'étape E2 n'analyse des données de contexte 25 comprend une sous-étape de vérification, pour chacun des utilisateurs Ui de la table d'utilisateurs TUk associée au contenu multimédia CMk, de la donnée de requête d'effacement C3Ui dans la table d'utilisateurs TUk associée au contenu multimédia CMk. Lorsque chaque utilisateur Ui de la table d'utilisateurs TUk associée au contenu multimédia CMk a requis l'effacement dudit contenu 30 multimédia CMk, le procédé met en oeuvre l'étape E3 d'effacement effectif dudit contenu multimédia CMk.

Selon une disposition, l'effacement effectif du contenu CMk n'est possible que si l'ensemble des utilisateurs Ui en a fait la demande. L'étape E3 n'est donc pas toujours mise en oeuvre et son exécution dépend de la valeur des données de contexte CjUi associées au contenu multimédia CMk.

Selon une disposition, lorsqu'au moins un ou plusieurs utilisateurs Ui de la table d'utilisateur TUk associée au contenu multimédia CMk n'ont pas requis l'effacement dudit contenu multimédia CMk, le procédé comprend une étape d'envoi d'un message auxdits utilisateurs afin de rappeler à ces derniers que ledit contenu multimédia CMk n'est pas encore effacé. Dans un mode de réalisation, le message envoyé permet également à l'utilisateur Ui recevant ledit message de demander l'effacement dudit contenu multimédia CMk. L'envoi du message est effectué à l'aide des données de communication associées à l'utilisateur Ui en question dans la base de données DB.

Autrement dit, lorsqu'un utilisateur Ui effectue une demande d'effacement, le moyen de calcul MC vérifie quels sont les utilisateurs Ui qui n'ont pas encore demandé l'effacement ou bien encore demandé le verrouillage, et envoie à chacun de ces utilisateurs Ui un message leur demandant de confirmer leur demande de verrouillage ou leur demandant s'ils souhaitent effacer ledit contenu. Ainsi, les utilisateurs Ui sont incités à effacer les contenus multimédia CMk qu'ils n'ont pas l'intention de visionner.

Selon une autre disposition, le message n'est pas envoyé à l'utilisateur Ui par des moyens de communication mais directement affiché au niveau d'un moyen d'affichage. Dans ce mode de réalisation, lorsqu'un utilisateur Ui est identifié, le moyen de calcul MC vérifie parmi les contenus multimédias CMk stockés depuis une période déterminée ou plus, si l'utilisateur Ui a encore des contenus multimédia CMk dont il n'a pas demandé l'effacement ou dont il a demandé le verrouillage. Si de tels contenus multimédia CMk existent, alors le message demande à l'utilisateur Ui s'il souhaite ou non effacer lesdits contenus multimédia CMk.

Selon une disposition, la table d'utilisateurs TU1 associée au contenu multimédia CM1 comporte trois utilisateurs : un premier utilisateur U1, un deuxième utilisateur U2 et un troisième utilisateur U3. Dans un premier temps, seul l'utilisateur U3 requiert l'effacement du contenu multimédia CM1. La table d'utilisateurs TU1 associé au contenu multimédia CM1 est illustrée dans le tableau 4.

**Tableau 4**

| **Utilisateur** | **Requête d'enregistrement** | **Position de lecture** | **Requête d'effacement** | **Requête de verrouillage** |
|---|---|---|---|---|
| U1 | Oui | 00 :00 :00 | Non | Non |
| U2 | Non | 00 :00 :00 | Non | Non |
| U3 | Non | 00 :00 :00 | Oui | Non |

La donnée de requête d'effacement C3U3 est donc mise à jour pour prendre en compte la requête du troisième utilisateur U3 et prend la valeur « Oui ». Le premier utilisateur U1 et le deuxième utilisateur U2 n'ayant pas requis l'effacement du contenu multimédia CM1, les données de requête d'effacement C3U1, C3U2 relatives au premier utilisateur U1 et au deuxième utilisateur U2 restent à la valeur « Non » et l'espace alloué au contenu multimédia CM1 n'est pas libéré.

Dans un deuxième temps, le premier utilisateur U1 et le deuxième utilisateur U2 20 ne désirant pas visionner le contenu multimédia CM1 requièrent également l'effacement de ce contenu multimédia CM1. Le tableau d'utilisateur TU1 comporte alors les données du tableau 5.

**Tableau 5**

| **Utilisateur** | **Requête d'enregistrement** | **Position de lecture** | **Requête d'effacement** | **Requête de verrouillage** |
|---|---|---|---|---|
| U1 | Oui | 00 :00 :00 | Oui | Non |
| U2 | Non | 00 :00 :00 | Oui | Non |
| U3 | Non | 00 :00 :00 | Oui | Non |

L'ensemble des utilisateurs Ui de la table d'utilisateurs TU1 du contenu multimédia CM1 ayant requis l'effacement du contenu multimédia CM1, l'espace alloué audit contenu multimédia CM1 sur le moyen de stockage HD est libéré, la table d'utilisateurs TU1 associée à ce contenu multimédia CM1 est supprimée et l'entrée correspondant au contenu multimédia CM1 dans la table des enregistrements TR est supprimés.

Il ne s'agit ici que d'un exemple de mise en oeuvre d'un procédé de gestion. On peut par exemple envisager un mode de réalisation dans lequel la donnée de requête d'effacement C3Ui est modifiée de 15 manière automatique à la fin de la lecture du contenu multimédia CM1, la valeur de cette donnée de contexte étant alors mise à jour à « Oui ». Un utilisateur Ui pourra alors s'assurer que le contenu multimédia CM1 n'est pas effacé en effectuant une requête de verrouillage, ladite requête modifiant la valeur de la donnée de requête de verrouillage C4Ui, cette dernière étant mise à jour à « Oui ».

Cet exemple de réalisation permet d'illustrer la gestion des différentes interactions entre les utilisateurs Ui du système. Cette dernière est grandement facilitée par la présence de la table d'utilisateurs TUk associée au contenu multimédia CMk. En outre, le procédé de stockage permet, grâce à la présence d'une table d'utilisateur TUk pour chaque contenu multimédia CMk, de mettre en oeuvre un procédé de lecture du contenu multimédia CMk prenant en compte les interactions entre différents utilisateurs Ui. 28 Pour cela, l'invention concerne un procédé de lecture d'un contenu multimédia CMk par un dispositif électronique DE.

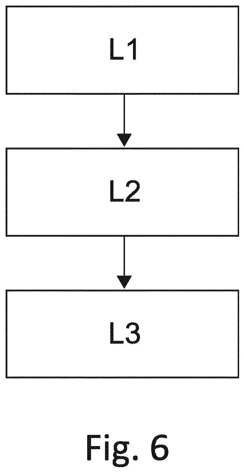

Dans un mode de réalisation illustré à la figure 6, le procédé lecture comprend une étape L1 d'identification d'un utilisateur Ui. Comme précisé précédemment, cette étape d'identification peut être effectuée par un procédé de reconnaissance faciale, le dispositif électronique comprenant des moyens d'identification par reconnaissance faciale. Alternativement, l'utilisateur Ui peut s'identifier au moyen d'une télécommande 10 couplée au dispositif électronique DE, ce dernier étant alors équipé des moyens pour recevoir des instructions en provenance de ladite télécommande. L'utilisateur Ui peut également s'identifier au moyen d'un ordiphone (ou smartphone en anglais), le dispositif électronique DE comportant alors des moyens pour communiquer avec ledit ordiphone, comme par exemple un moyen de connexion Bluetooth ou Wifi. Il ne s'agit ici que d'exemples et tout autre moyen d'identification peut être envisagé.

Le procédé comprend en outre une étape L2 de sélection par l'utilisateur Ui identifié d'un contenu multimédia CMk. Cette étape de sélection peut être 20 effectuée au moyen d'une liste de contenus multimédia CMk. Cette liste de contenus multimédia CMk peut être obtenue en affichant les contenus multimédia CMk de la table des d'enregistrements TR que l'utilisateur Ui identifié n'a pas encore visionnés ou seulement partiellement visionnés. Autrement dit, la liste proposée à l'utilisateur Ui identifié ne comporte pas tous les contenus multimédia CMk de la table des enregistrements TR mais uniquement les contenus multimédia CMk non-encore ou seulement partiellement visionnés par l'utilisateur Ui identifié. Par exemple, cette liste ne comportera pas les contenus multimédia CMk pour lesquels l'utilisateur Ui a requis l'effacement. Les données de contexte CjUi sont donc également utilisées pour générer la liste de contenus multimédia CMk proposée à l'utilisateur Ui pour l'étape L2 de sélection d'un contenu multimédia CMk. Le procédé comprend en outre une étape L3 de déclenchement de la lecture du contenu multimédia CMk sélectionné, les paramètres de lecture dépendant des données de contexte CjUi associées à l'utilisateur Ui identifié et contenues dans la table d'utilisateurs TUk.

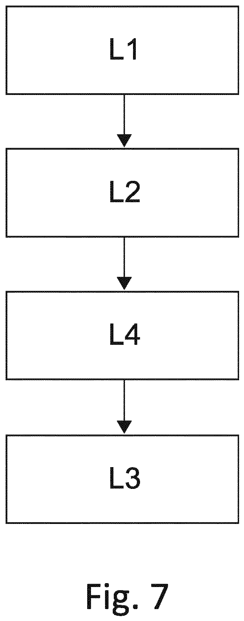

Selon l'invention, tel qu'-illustré à la figure 7, l'étape L3 de déclenchement de la lecture est précédée d'une étape L4 de création d'une table d'utilisateurs regardant, l'utilisateur Ui identifié étant ajouté à ladite table d'utilisateurs regardant lors de la création de ladite table d'utilisateurs regardant.

Ce procédé de lecture prend donc en compte les données de contexte CjUi contenues dans la table d'utilisateurs TUk associée au contenu multimédia CMk afin de paramétrer ladite lecture du contenu multimédia CMk. Ces données de contexte CjUi peuvent par exemple être liées à une langue de sous-titre, une langue de la bande audio ou bien encore au volume sonore. Les données de contexte peuvent être initialisées à une valeur par défaut, par exemple au moyen d'un profil utilisateur créé auparavant par chaque utilisateur et précisant la valeur par défaut à prendre pour chaque donnée de contexte ou pour seulement une partie d'entre elles. Dans un mode de réalisation, les données de contexte CjUi comprennent la position de lecture C1Ui et les paramètres de lecture incluent ladite position de lecture C1Ui.

Dans un mode de réalisation, l'utilisateur Ui identifié peut signaler des passages intéressants d'un contenu multimédia CMk. Plus particulièrement, le procédé comprend une étape de saisie, par un utilisateur Ui, d'un point d'intérêt, le point d'intérêt étant associé à une position de lecture du contenu multimédia CMk en cours de lecture. Le procédé peut également comprendre une étape d'émission d'un message comprenant ladite position de lecture auprès des autres utilisateurs Ui. Dans un mode de réalisation, lors de l'étape de saisie d'un point d'intérêt, l'utilisateur Ui peut également choisir les utilisateurs Ui avec qui l'information peut être partagée. Dans un mode de réalisation, le message n'est pas envoyé mais apparait lorsque les utilisateurs Ui s'identifient ou bien encore lorsque les utilisateurs Ui visionnent ledit contenu multimédia CMk.

Dans un exemple de réalisation, un contenu multimédia CM1 est associé à une table d'utilisateur T1, la table d'utilisateur U1 comprenant des données de contexte correspondant à un premier utilisateur U1 et un deuxième utilisateur U2. Cette table d'utilisateurs est illustrée dans le tableau 6.

**Tableau 6**

| **Utilisateur** | **Requête d'enregistrement** | **Position de lecture** | **Requête d'effacement** | **Requête de verrouillage** |
|---|---|---|---|---|
| U1 | Oui | 01 :44 :17 | Non | Non |
| U2 | Non | 00 :00 :00 | Non | Non |

La donnée de position de lecture C1U1 indique que le premier utilisateur U1 a 10 déjà visionné une partie du contenu multimédia CM1. Dans un premier temps, le premier utilisateur Ui s'identifie. Dans un second temps, le premier utilisateur U1 déclenche la lecture du contenu multimédia CM1, par exemple au moyen d'une télécommande par sélection du contenu multimédia CM1 dans une liste de contenus multimédia CMk. Le dispositif électronique DE extrait, à l'aide du moyen 15 de calcul MC, la position de lecture C1U1 dans la table d'utilisateurs TU1 associée au contenu multimédia CM1, pour l'utilisateur identifié, c'est-à-dire le premier utilisateur U1. Le dispositif électronique DE déclenche ensuite la lecture du contenu multimédia CM1, cette lecture débutant à une position correspondant à la position de lecture C1U1 du premier utilisateur, ici « 01 :44 :17 ».

Lorsque le deuxième utilisateur U2 désire visionner le contenu multimédia CM1, il procède de la même manière. Le deuxième utilisateur U2 est identifié puis ce dernier sélectionne le contenu multimédia CM1. Le dispositif électronique DE extrait, à l'aide du moyen de calcul MC, la position de lecture C1U2 dans la table d'utilisateur TU1 associée au contenu multimédia CM1, pour l'utilisateur identifié, c'est-à-dire le deuxième utilisateur U2. La position de lecture C1U2 étant nulle pour le deuxième utilisateur U2, la lecture du contenu multimédia CM1 commencera au début dudit contenu multimédia CM1. Il apparait, à la lecture de cet exemple, que deux utilisateurs U1, U2 peuvent gérer de manière séparée les données de contexte CjUi relatives à un même contenu multimédia CM1.

Cependant, des utilisateurs Ui peuvent être amenés à interagir. Un premier utilisateur U1 peut par exemple visionner un premier contenu multimédia CM1 avec un deuxième utilisateur U2.

Afin de prendre en charge cette situation, dans un mode de réalisation selon l'invention, l'étape L1 d'identification est effectuée sur une pluralité d'utilisateurs Ui, l'étape L2 de sélection est réalisée par un utilisateur Ui de la pluralité d'utilisateurs Ui et les paramètres de lecture de l'étape L3 de déclenchement de la lecture dépendent des données de contexte CjUi associées à la pluralité d'utilisateurs Ui identifiés et contenues dans la table d'utilisateurs TUk.

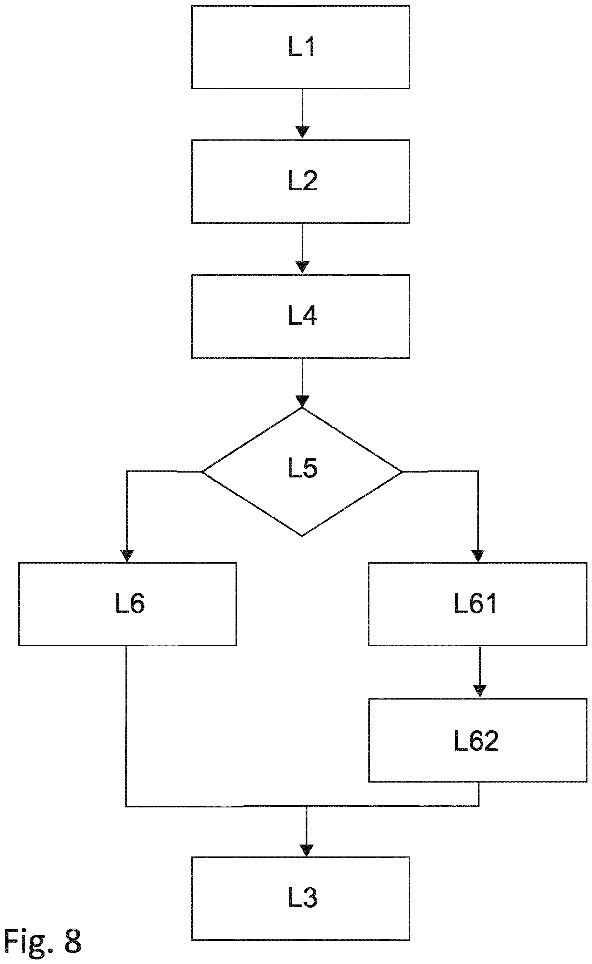

Dans un mode de réalisation illustré à la figure 8, le procédé de lecture comprend, avant l'étape L3 de déclenchement de la lecture, une étape L5 de comparaison de la position de lecture de chaque utilisateur Ui de la pluralité d'utilisateurs Ui avec la position de lecture des autres utilisateurs Ui de la pluralité d'utilisateurs Ui. Lorsque la position de lecture C1Ui est identique pour tous les utilisateurs Ui, le procédé comprend, entre l'étape L5 de comparaison de la position de lecture et l'étape L3 de déclenchement de la lecture, une étape L6 d'initialisation de la position de lecture à la valeur de la position de lecture commune à tous les utilisateurs Ui.

Dans un mode de réalisation, lorsqu'au moins un utilisateur Ui a une position de lecture C1Ui différente des autres utilisateurs Ui de la pluralité d'utilisateurs Ui, le procédé comprend, entre l'étape L5 de comparaison de la position de lecture et l'étape L3 de déclenchement de la lecture :
- une étape L61 d'affichage d'un menu permettant de sélectionner une position de lecture parmi l'ensemble des positions de lecture de la 30 pluralité d'utilisateurs Ui ;
- une étape L62 d'initialisation de la position de lecture à la valeur sélectionnée. Dans un exemple de réalisation, la table d'utilisateurs TU1 d'un premier contenu multimédia CM1 est donnée au tableau 7.

**Tableau 7**

| **Utilisateur** | **Requête d'enregistrement** | **Position de lecture** | **Requête d'effacement** | **Requête de verrouillage** |
|---|---|---|---|---|
| U1 | Oui | 01 :14 :17 | Non | Non |
| U2 | Non | 00 :00 :00 | Non | Non |
| U3 | Non | 00 :00 :00 | Non | Non |

Cette table d'utilisateurs TU1 contient les données de contexte d'un premier utilisateur U1, d'un deuxième utilisateur U2 et d'un troisième utilisateur U3. Dans cet exemple de mise en oeuvre, le premier utilisateur U1 et le deuxième utilisateur U2 visionnant le contenu multimédia CM1 ensemble, l'étape d'identification L1 est donc effectuée sur le premier utilisateur U1 et le deuxième utilisateur U2. L'étape de sélection L2 est réalisée par le premier utilisateur U1 ou le deuxième utilisateur U2 et les paramètres de lecture de l'étape L3 de déclenchement de la lecture sont alors fonction des données de contexte CjU1 associées au premier utilisateur U1 et des données de contexte CjU2 associées au deuxième utilisateur U2.

Plus particulièrement les données de contexte CjUi comprennent la position de lecture C1Ui et les paramètres de lecture incluent la position de lecture C1Ui. Le premier utilisateur U1 et le deuxième utilisateur U2 ayant été identifié, le procédé de lecture met en oeuvre une étape L5 de comparaison entre la position de lecture du premier utilisateur U1 et la position de lecture du deuxième utilisateur U2.

Comme illustré dans le tableau 7, la position de lecture C1U1 du premier utilisateur U1 est différente de la donnée de position de lecture C1U2 du deuxième utilisateur U2. Le procédé de lecture met donc en oeuvre une étape L61 d'affichage d'un menu permettant de sélectionner une position de lecture parmi la position de lecture du premier utilisateur U1 et la position de lecture du deuxième utilisateur U2. La sélection de la position de lecture est effectuée par l'un des deux utilisateurs U1, U2. Par exemple, le premier utilisateur U1 peut choisir de sélectionner la position de lecture du deuxième utilisateur U2. Dans ce cas, le procédé met en oeuvre une étape L62 d'initialisation de la position de lecture à la valeur de la position de lecture de l'utilisateur U2, autrement dit, la lecture commence au début du contenu multimédia CM1, la donnée de position de lecture du deuxième utilisateur U2 étant égale à « 00 :00 :00 ».

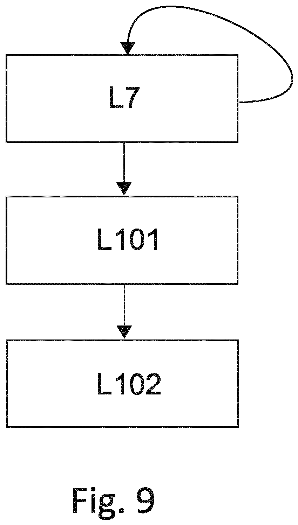

Dans un mode de réalisation illustré à la figure 9, le procédé de lecture comprend 10 une deuxième étape L7 d'identification des utilisateurs Ui durant la lecture du contenu multimédia CMk, ladite deuxième étape L7 étant répétée à intervalles réguliers durant la lecture. Cet intervalle peut être d'une seconde par exemple et la deuxième étape L7 d'identification est donc effectuée toutes les secondes. Dans un mode de réalisation, la valeur de cet intervalle est paramétrable. Dans ce mode de réalisation, le moyen d'identification peut être configuré pour détecter la présence de nouveaux utilisateurs.

Dans un mode de réalisation, le procédé de lecture comprend, lorsqu'un utilisateur Ui identifié lors de l'étape L7 n'est pas dans la table des utilisateurs regardant :
- une première sous-étape L101 d'affichage d'un menu permettant à l'utilisateur Ui de conserver la position de lecture C1Ui associée audit utilisateur Ui dans la table d'utilisateur TUk ou de réinitialiser cette position de lecture C1Ui à la valeur de la position de lecture courante ;
- lorsque l'utilisateur Ui choisi de réinitialiser la position de lecture C1Ui, une deuxième sous-étape L102 d'ajout de l'utilisateur Ui à la table des utilisateurs regardant.

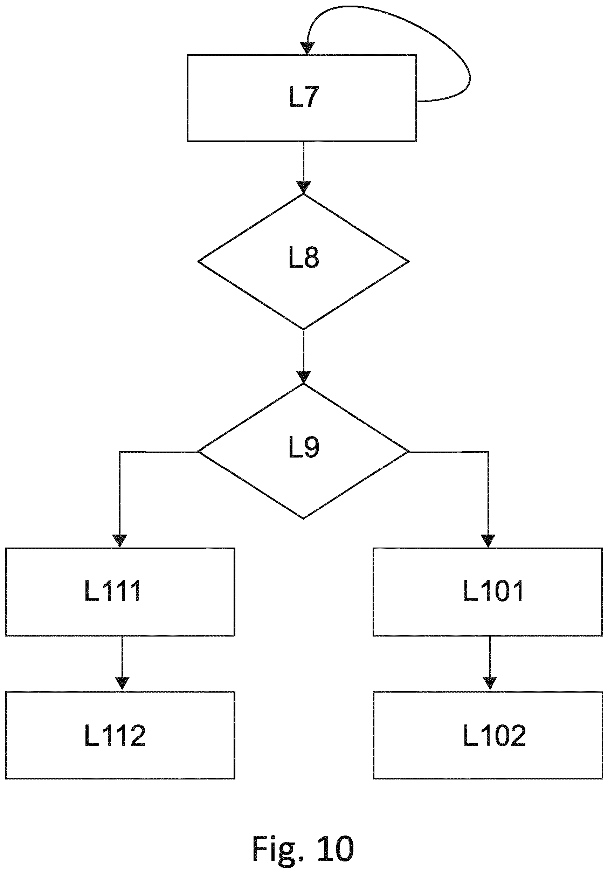

Dans un mode de réalisation illustré à la figure 10, le procédé de lecture comprend, lorsqu'un utilisateur Ui identifié lors de l'étape L7 n'est pas dans la liste des utilisateurs regardant, une étape L8 de vérification de la donnée de requête d'effacement C3Ui relatives à l'utilisateur Ui contenue dans la table d'utilisateurs TUk relative au contenu multimédia CMk en cours de lecture. Comme précisé précédemment, le moyen de d'identification est configuré pour détecter la présence de nouveaux utilisateurs de sorte que la sous-étape L101 d'affichage n'est effectuée qu'une fois pour chaque nouvel utilisateur Ui. Autrement dit, une fois qu'un nouvel utilisateur Ui a été détecté et s'est vu proposé le menu de sélection, ce menu ne lui sera plus proposée aux occurrences suivantes de deuxième étape L7 d'identification.

Dans ce mode de réalisation, lorsque l'utilisateur Ui n'a pas demandé l'effacement du contenu multimédia CMk en cours de lecture, le procédé comprend une étape L9 de vérification de la donnée de position de lecture C1Ui contenue dans la table des utilisateurs TUk relative au contenu multimédia CMk en cours de lectures. Lorsque cette position de lecture est antérieure à la position de lecture courante, le procédé comprend :
- une première sous-étape L101 d'affichage d'un menu permettant à l'utilisateur Ui de conserver la position de lecture C1Ui associée audit utilisateur dans la table d'utilisateur TUk ou de réinitialiser cette position de lecture C1Ui à la valeur de la position de lecture courante ;
- lorsque l'utilisateur Ui choisi de réinitialiser la position de lecture C1Ui, une deuxième sous-étape L102 d'ajout de l'utilisateur Ui à la table des utilisateurs regardant.

Dans un mode de réalisation, lorsque cette position de lecture est postérieure à la position de lecture courante, le procédé comprend :
- une première sous-étape L111 d'initialisation de la position de lecture de l'utilisateur Ui à la valeur de la position de lecture courante ;
- une deuxième sous-étape L112 d'ajout de l'utilisateur Ui à la table des utilisateurs regardant.

Dans un exemple de réalisation, la table d'utilisateurs TU1 d'un premier contenu multimédia CM1 est donnée au tableau 8.

**Tableau 8**

| **Utilisateur** | **Requête d'enregistrement** | **Position de lecture** | **Requête d'effacement** | **Requête de verrouillage** |
|---|---|---|---|---|
| U1 | Oui | 00 :34 :17 | Non | Non |
| U2 | Non | 00 :00 :00 | Non | Non |
| U3 | Non | 00 :00 :00 | Non | Non |

Dans cet exemple de réalisation, l'utilisateur U1 a déjà visionné une partie du 5 contenu multimédia CM1. En outre, les utilisateurs U2 et U3 sont en cours de visionnage et la position de lecture à l'instant où le premier utilisateur U1 se joint à eux est égale à « 00 :28 :20 », c'est-à-dire inférieure à la position de lecture associée à la donnée de position de lecture C1U1 contenue dans les données de contexte de la table d'utilisateurs TU1. Lorsque le premier utilisateur U1 est à son 10 tour identifié lors de la deuxième étape L7 d'identification, celui-ci n'étant pas dans la liste des utilisateurs regardant, la donnée de requête d'effacement associé à l'utilisateur U1 dans la table d'utilisateur TU1 est vérifiée lors de l'étape L8 de vérification. Ici, la donnée de requête d'effacement est égale à « Non ». Le procédé procède donc à une étape L9 de vérification de la donnée de position de lecture C1U1 de l'utilisateur U1 dans la table d'utilisateur TU1. La position de lecture de l'utilisateur U1 étant postérieure à la position de lecture courante, le procédé de lecture initialise la position de lecture de l'utilisateur U1 dans la table d'utilisateur U1 à la position de lecture courante. En outre, l'utilisateur U1 est également ajouté à la table d'utilisateurs regardant TR.

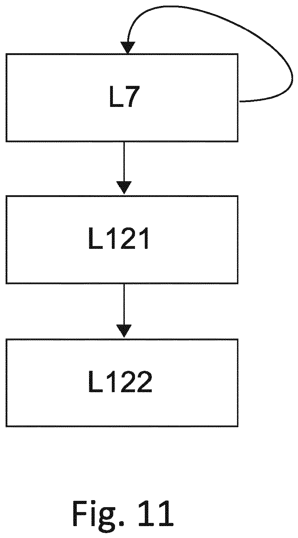

Dans un mode de réalisation illustré à la figure 11, lorsqu'un utilisateur Ui présent dans la liste des utilisateurs regardant n'est pas identifié lors de la deuxième étape d'identification L7, le procédé comprend : - une première sous-étape L121 de mise à jour de la position de lecture C1Ui dudit utilisateur Ui, ladite position de lecture C1Ui étant réinitialisée à la position de lecture du contenu multimédia CMk à l'instant où la deuxième étape d'identification est mise en oeuvre ; - une deuxième sous-étape L122 de suppression de l'utilisateur Ui de la table des utilisateurs regardant. Dans un mode de réalisation selon l'invention, le procédé de lecture comprend une étape d'arrêt de la lecture et une étape de réinitialisation de la position de lecture C1Ui pour les utilisateurs Ui de la table d'utilisateurs regardant, la position de lecture C1Ui étant réinitialisée à une valeur égale à la position de lecture au moment de l'arrêt de la lecture.

Dans un exemple de réalisation, la table d'utilisateurs TU1 d'un premier contenu multimédia CM1 est donnée au tableau 9.

**Tableau 9**

| **Utilisateur** | **Requête d'enregistrement** | **Position de lecture** | **Requête d'effacement** | **Requête de verrouillage** |
|---|---|---|---|---|
| U1 | Oui | 00 :34 :17 | Non | Non |
| U2 | Non | 00 :00 :00 | Non | Non |
| U3 | Non | 00 :00 :00 | Non | Non |

Dans cet exemple de réalisation, l'utilisateur U1 a déjà visionné une partie du 15 contenu multimédia CM1. En outre le deuxième utilisateur U2 et le troisième utilisateur U3 sont en cours de visionnage et sont présents dans la table des utilisateurs regardant. La position de lecture à l'instant où l'utilisateur U3 stoppe le visionnage est égale à « 00 :28 :20 ». Le troisième utilisateur U3 étant présent dans la liste des utilisateurs regardant mais n'étant pas identifié puisque ne regardant plus le contenu multimédia, le procédé de lecture met à jour de la position de lecture C1U3 du troisième utilisateur U3 à une valeur égale à la position de lecture du contenu multimédia CM1 à l'instant où l'absence du troisième utilisateur U3 a été constaté. Dans le cas où la deuxième étape d'identification est répétée toute les seconde, la position de lecture C1U3 du 25 troisième utilisateur U3 est donc mise à jour à « 00 :28 :20 ». Le procédé de lecture supprime également le troisième utilisateur U3 de la table des utilisateurs regardant. A l'issue de ces étapes, la table d'utilisateur TU1 est telle que présentée dans le tableau 10.

**Tableau 10**

| **Utilisateur** | **Requête d'enregistrement** | **Position de lecture** | **Requête d'effacement** | **Requête de verrouillage** |
|---|---|---|---|---|
| U1 | Oui | 00 :34 :17 | Non | Non |
| U2 | Non | 00 :00 :00 | Non | Non |
| U3 | Non | 00 :28 :20 | Non | Non |

Dans un deuxième temps, le deuxième utilisateur met fin à la lecture du contenu multimédia M1. La position de lecture à l'instant où l'utilisateur U2 met fin au procédé de lecture est égale à « 00 :48 :10 ». La position de lecture est donc réinitialisée à une valeur égale à la position de lecture au moment de l'arrêt de la lecture, c'est-à-dire « 00 :48 :10 ». A l'issue de l'arrêt de la lecture, la table d'utilisateur TU1 associé au contenu multimédia CM1 est telle qu'illustrée au tableau 11.

**Tableau 11**

| **Utilisateur** | **Requête d'enregistrement** | **Position de lecture** | **Requête d'effacement** | **Requête de verrouillage** |
|---|---|---|---|---|
| U1 | Oui | 00 :34 :17 | Non | Non |
| U2 | Non | 00 :48:10 | Non | Non |
| U3 | Non | 00 :28 :20 | Non | Non |

Cet exemple de réalisation permet de comprendre comment le procédé de lecture selon l'invention permet de gérer dynamiquement une session de visionnage multiutilisateur.

Afin d'optimiser l'espace occupée par les différents contenu multimédia CMk, il est également possible d'analyser les lectures effectuées par les utilisateurs Ui. En effet, un contenu multimédia CMk comporte une position de lecture initiale correspondant au temps zéro dudit contenu multimédia CMk et une position de lecture finale correspondant à la durée dudit contenu multimédia CMk. Ces deux positions de lecture correspondent aux deux extrémités en mémoire de l'espace de stockage alloué audit contenu multimédia. Or, il est possible que l'évènement qu'un utilisateur souhaite enregistrer ne soit pas encore commencé au début de l'étape d'acquisition et de mémorisation ou bien encore qu'il soit terminé avant la fin de cette étape d'acquisition et de mémorisation. Le contenu multimédia occupe alors un espace en mémoire plus important que nécessaire, le début et la fin du contenu multimédia ne correspondant pas à l'évènement intéressant l'utilisateur. Il importe donc de pouvoir limiter l'espace mémoire alloué inutilement.

Pour ce faire, l'étape de réinitialisation de la position de lecture C1Ui peut être suivie d'une étape de modification de l'espace alloué. Cette modification est alors faite en fonction des données de contexte CjUi contenu dans la table d'utilisateurs TUk et notamment de la position de lecture C1Ui associée à chaque utilisateur Ui dans cette table. Plus particulièrement, l'espace alloué est modifié de sorte à ne conserver que la partie du contenu multimédia CMk située à partir de la position de lecture C1Ui la moins élevée parmi les positions de lecture la table d'utilisateurs TUk associée audit contenu multimédia CMk. Dans l'exemple de réalisation illustré au tableau 11, à l'issue de l'étape de réinitialisation de la position de lecture, le contenu multimédia est modifiée de sorte à ne conserver que la partie du contenu multimédia situé après la position de lecture C1Ui la plus faible, ici celle de l'utilisateur U3 égale à 00 :28 :20. Dans un mode de réalisation, les positions de lecture CiUj sont ensuite adaptées afin de prendre en compte la modification du contenu multimédia CMk. A l'issue de cette modification du contenu multimédia, la table d'utilisateur correspond alors au tableau 12.

**Tableau 12**

| **Utilisateur** | **Requête d'enregistrement** | **Position de lecture** | **Requête d'effacement** | **Requête de verrouillage** |
|---|---|---|---|---|
| U1 | Oui | 00 :05 :57 | Non | Non |
| U2 | Non | 00 :19 :50 | Non | Non |
| U3 | Non | 00 :00 :00 | Non | Non |

Les nouvelles positions C1Ui de lecture des utilisateurs Ui sont alors relatives au contenu multimédia CMk modifié. Bien sûr, un tel fonctionnement peut être optionnel et faire par exemple l'objet d'une option dans un menu qu'un 39 utilisateur Ui peut paramétrer. De manière plus générale, toute donnée de contexte CjUi liée à la position de lecture, par exemple un moment important sélectionné par l'utilisateur Ui, est également adaptée en fonction de la modification de l'espace allouée au contenu multimédia CMk.

Dans un mode de réalisation, les informations concernant la partie du contenu multimédia CMk relative à l'évènement d'intérêt peut être définie par l'utilisateur. Pour cela, l'étape de réinitialisation de la position de lecture est suivie d'une étape de saisie, par un utilisateur Ui parmi les utilisateurs regardant, d'une première position de lecture, dite position de début effectif, et d'une deuxième position de lecture, dite position de fin effective. Puis, une étape de modification de l'espace alloué est mise en oeuvre, l'espace alloué ainsi modifié ne conservant que la partie du contenu multimédia CMk située entre la position de début effectif et la position de fin effective.

Comme expliqué précédemment, les nouvelles positions de lecture des utilisateurs sont alors adaptées au contenu multimédia modifié. Bien sûr, comme précédemment, un tel fonctionnement peut être optionnel est faire par exemple l'objet d'une option dans un menu qu'un utilisateur peut paramétrer. Encore une fois, de manière plus générale, toute donnée de contexte liée à la position de lecture, par exemple un moment important sélectionné par l'utilisateur est également adapté en fonction de la modification de l'espace allouée au contenu multimédia CMk.

Comme expliqué précédemment, ces deux modes de réalisation permettent de limiter l'occupation mémoire d'un contenu multimédia CMk sur l'espace de stockage HD à l'occupation strictement nécessaire au contenu multimédia CMk proprement dit.

## Revendications

1. Procédé de lecture d'un contenu multimédia unique par un dispositif électronique (DE), ledit dispositif comportant une base de données (DB) contenant une liste d'utilisateurs et une table des enregistrements (TR) des contenus multimédias uniques, un moyen de calcul (MC), un moyen d'acquisition (MA) du contenu multimédia unique et un moyen de stockage (DB), ledit moyen de stockage (DB) contenant aux moins un contenu multimédia préalablement stocké selon les étapes suivantes, implémentées pour chaque contenu multimédia unique stocké :
- une première étape (S1) d'allocation d'un espace de stockage sur le moyen de stockage par le moyen de calcul (MC) ;
- une deuxième étape (S2) d'ajout d'une entrée relative au contenu multimédia unique stocké à la table des enregistrements (TR) ;
- une troisième étape (S3) d'acquisition du contenu multimédia unique et de mémorisation dudit contenu multimédia unique dans l'espace de stockage alloué ;
- une quatrième étape (S4) de création d'une table d'utilisateurs relative au contenu multimédia unique stocké, ladite table d'utilisateurs comprenant, pour chaque utilisateur d'un sous-ensemble de la liste d'utilisateurs contenue dans la base de données (DB), une ou plusieurs données de contexte,
ledit moyen de stockage (DB) contenant en outre la table d'utilisateurs associée audit contenu multimédia unique, ledit procédé de lecture étant **caractérisé en ce qu'**il comprend :
- une étape (L1) d'identification d'un utilisateur ;
- une étape (L2) de sélection par l'utilisateur identifié d'un contenu multimédia unique;
- une étape (L3) de déclenchement de la lecture du contenu multimédia unique sélectionné, les paramètres de lecture comprenant les données de contexte associées à l'utilisateur identifié et contenues dans la table d'utilisateurs, les données de contexte comprenant la donnée de position de lecture et **en ce que** les paramètres de lecture de l'étape (L3) de déclenchement de la lecture incluent la position de lecture, l'étape (L3) de déclenchement de la lecture étant précédée d'une étape (L4) de création d'une table d'utilisateurs regardant, l'utilisateur identifié étant ajouté à ladite table d'utilisateurs regardant lors de la création de ladite table d'utilisateurs regardant,
et **en ce que** l'étape (L 1 ) d'identification est effectuée sur une pluralité d'utilisateurs, **en ce que** l'étape (L2) de sélection est réalisée par un utilisateur de la pluralité d'utilisateurs, **en ce que** la pluralité d'utilisateurs identifiée est ajoutée à la liste d'utilisateurs regardant et **en ce que** les paramètres de lecture de l'étape (L3) de déclenchement de la lecture comprennent les données de contexte associées à la pluralité d'utilisateurs identifiés et contenues dans la table d'utilisateurs,
et **en ce qu'**il comprend une étape d'arrêt de la lecture; une étape de réinitialisation de la position de lecture pour chaque utilisateur de la table d'utilisateurs regardant, la position de lecture étant réinitialisée à une valeur égale à la position de lecture au moment de l'arrêt de la lecture, ladite étape de réinitialisation de la position de lecture étant suivie d'une étape de modification de l'espace alloué, l'espace alloué ainsi modifié ne conservant que la partie du contenu multimédia unique située à partir de la position de lecture la moins élevée parmi les positions de lecture la table d'utilisateurs associée audit contenu multimédia unique.

2. Procédé de lecture selon la revendication 1, **caractérisé en ce qu'**il comprend une deuxième étape d'identification (L7) d'au moins un utilisateur durant la lecture du contenu multimédia unique, ladite étape étant répétée à intervalles réguliers durant la lecture.

3. Procédé de lecture selon la revendication 2, **caractérisé en ce que** le procédé comprend, lorsqu'un utilisateur identifié lors de la deuxième étape (L7) d'identification n'est pas dans la liste d'utilisateurs regardant :
- une étape (L 101) d'affichage d'un menu permettant à l'utilisateur identifié de conserver la position de lecture contenue dans la table d'utilisateurs ou de réinitialiser cette position de lecture à la valeur de la position de lecture courante ; lorsque l'utilisateur identifié choisi de réinitialiser la position de lecture,
- une étape (L 102) d'ajout de l'utilisateur à la table des utilisateurs regardant.

4. Procédé de lecture selon l'une des revendications précédentes, **caractérisé en ce qu'**il comprend, lorsqu'un utilisateur de la table d'utilisateurs regardant n'est pas identifié lors de la deuxième étape (L 7) d'identification :
- une étape (L 121) de mise à jour de la position de lecture dudit utilisateur, ladite position de lecture étant réinitialisée à la position de lecture courante du contenu multimédia unique ;
- une étape (L 122) de suppression de l'utilisateur de la table des utilisateurs regardant.

5. Procédé selon les revendications 3 ou 4, **caractérisé en ce que** l'étape de réinitialisation de la position de lecture est suivie :
- d'une étape de saisie, par un utilisateur, d'une première position de lecture, dite position de début effectif, et d'une deuxième position de lecture, dite position de fin effective ;
- d'une étape de modification de l'espace alloué, l'espace alloué ainsi modifié ne conservant que la partie du contenu multimédia unique située entre la position de début effectif et la position de fin effective.

6. Procédé de lecture selon l'une des revendications précédentes, **caractérisé en ce que** la table d'utilisateurs comprend, pour chaque utilisateur :
- une première donnée de contexte relative à la position de lecture du contenu multimédia unique, dite donnée de position de lecture ; et/ou
- une deuxième donnée de contexte relative à la requête d'enregistrement, dite donnée de requête d'enregistrement, indiquant si l'utilisateur a requis l'enregistrement du contenu multimédia unique ; et/ou
- une troisième donnée de contexte relative à la requête d'effacement, dite donnée de requête d'effacement, indiquant si l'utilisateur a requis l'effacement du contenu multimédia unique ; et/ou une quatrième donnée de contexte relative à la requête de verrouillage, dite donnée de requête de verrouillage, indiquant si l'utilisateur a requis le verrouillage du contenu multimédia unique ;
l'étape (S4) de création de la table d'utilisateur et l'initialisation des première, deuxième, troisième et/ou quatrième données de contexte de ladite table étant mises en oeuvre lors de la deuxième étape (S2) d'ajout d'une entrée relative au contenu multimédia unique dans la table des enregistrements (TR).

7. Procédé de lecture selon l'une des revendications précédentes, **caractérisé en ce que** le procédé comprend, lorsque le contenu multimédia unique est en cours de visionnage par au moins un utilisateur lors de l'étape (S3) d'acquisition et de mémorisation dudit contenu multimédia unique :
- une étape d'identification de l'utilisateur ;
- à l'arrêt du visionnage dudit contenu multimédia unique, une étape de mise à jour des données de contexte dudit utilisateur dans la table d'utilisateurs associée audit contenu multimédia unique.

8. Procédé de lecture selon l'une des revendications précédentes, **caractérisé en ce qu'**il comprend:
- une étape (E1) de saisie d'un ordre d'effacement d'un contenu multimédia unique ;
- une étape (E2) d'analyse des données de contexte de la table d'utilisateurs associée audit contenu multimédia unique ;
- une étape (E3) d'effacement effectif du contenu multimédia unique, ledit effacement étant conditionné par l'étape (E2) d'analyse des données de contexte.

9. Procédé de lecture selon la revendication précédente, **caractérisé en ce qu'**il comprend, avant l'étape (E1) de saisie d'un ordre d'effacement, une étape (EO) d'indentification d'un utilisateur, l'étape (E1) de saisie d'un ordre d'effacement étant effectuée par l'utilisateur identifié.

10. Procédé de lecture selon la revendication précédente, **caractérisé en ce que** le procédé comprend, entre l'étape (E1) de saisie d'un ordre d'effacement et l'étape (E2) d'analyse des données de contexte, une étape (E4) de mise à jour des données de contexte associées à l'utilisateur ayant saisi l'ordre d'effacement dans la table d'utilisateurs associée au contenu multimédia unique sélectionné.

11. Procédé de lecture selon la revendication précédente, **caractérisé en ce que** la liste d'utilisateurs comprend, pour chaque utilisateur, une ou plusieurs données de communication correspondant à des moyens de communication et **en ce que** le procédé comprend, après l'étape (E2) d'analyse des données de contexte et lorsqu'un ou plusieurs utilisateurs de la table d'utilisateurs associée au contenu multimédia unique sélectionné n'ont pas requis l'effacement et/ou ont requis le verrouillage dudit contenu multimédia unique, une étape d'envoi d'un message auxdits utilisateurs à l'aide desdites données de communication.

12. Dispositif électronique (DE) comportant une base de données (DB) contenant une liste d'utilisateurs et une table des enregistrements (TR), un moyen de calcul (MC), un moyen d'acquisition (MA) d'un contenu multimédia unique et un moyen de stockage (HO), **caractérisé en ce que** le dispositif est configuré pour mettre en oeuvre un procédé selon l'une des revendications précédentes.

13. Produit programme d'ordinateur comprenant des instructions qui conduisent le dispositif selon la revendication précédente à exécuter les étapes du procédé selon l'une des revendications 1 à 11.

14. Support lisible par ordinateur, sur lequel est enregistré le programme d'ordinateur selon la revendication précédente.

## Patentansprüche

1. Verfahren zum Lesen eines eindeutigen Multimediainhalts durch eine elektronische Vorrichtung (DE), wobei die Vorrichtung eine Datenbank (DB), die eine Benutzerliste und eine Tabelle der Aufzeichnungen (TR) der eindeutigen Multimediainhalte enthält, ein Rechenmittel (MC), ein Mittel zur Erfassung (MA) des eindeutigen Multimediainhalts und ein Speicherungsmittel (DB) aufweist, wobei das Speicherungsmittel (DB) wenigstens einen Multimediainhalt enthält, der zuvor gemäß den folgenden Schritten gespeichert wurde, die für jeden gespeicherten eindeutigen Multimediainhalt implementiert werden:
- einen ersten Schritt (S1) des Zuweisens eines Speicherplatzes auf dem Speicherungsmittel durch das Rechenmittel (MC);
- einen zweiten Schritt (S2) des Hinzufügens eines Eintrags in Bezug auf den gespeicherten eindeutigen Multimediainhalt zur Tabelle der Aufzeichnungen (TR);
- einen dritten Schritt (S3) des Erfassens des eindeutigen Multimediainhalts und des Speicherns des eindeutigen Multimediainhalts in dem zugewiesenen Speicherplatz;
- einen vierten Schritt (S4) des Erstellens einer Benutzertabelle in Bezug auf den gespeicherten eindeutigen Multimediainhalt, wobei die Benutzertabelle für jeden Benutzer einer Teilmenge der Benutzerliste, die in der Datenbank (DB) enthalten ist, eine oder mehrere Kontextdateninformationen umfasst,
wobei das Speicherungsmittel (DB) ferner die Benutzertabelle enthält, die dem eindeutigen Multimediainhalt zugeordnet ist, wobei das Leseverfahren **dadurch gekennzeichnet ist, dass** es Folgendes umfasst:
- einen Schritt (L1) des Identifizierens eines Benutzers;
- einen Schritt (L2) des Auswählens eines eindeutigen Multimediainhalts durch den identifizierten Benutzer;
- einen Schritt (L3) des Auslösens des Lesens des ausgewählten eindeutigen Multimediainhalts, wobei die Leseparameter die Kontextdateninformationen umfassen, die dem identifizierten Benutzer zugeordnet und in der Benutzertabelle enthalten sind, wobei die Kontextdateninformationen die Lesepositionsdateninformation umfassen, und dadurch, dass die Leseparameter des Schritts (L3) des Auslösens des Lesens die Leseposition beinhalten, wobei dem Schritt (L3) des Auslösens des Lesens ein Schritt (L4) des Erstellens einer Tabelle schauender Benutzer vorangeht, wobei der identifizierte Benutzer bei der Erstellung der Tabelle schauender Benutzer der Tabelle schauender Benutzer hinzugefügt wird,
und dadurch, dass der Schritt (L1) des Identifizierens an einer Mehrzahl von Benutzern durchgeführt wird, dadurch, dass der Schritt (L2) des Auswählens von einem Benutzer der Mehrzahl von Benutzern durchgeführt wird, dadurch, dass die identifizierte Mehrzahl von Benutzern der Liste schauender Benutzer hinzugefügt wird, und dadurch, dass die Leseparameter des Schritts (L3) des Auslösens des Lesens die Kontextdateninformationen umfassen, die der Mehrzahl von identifizierten Benutzern zugeordnet und in der Benutzertabelle enthalten sind,
und dadurch, dass es einen Schritt des Anhaltens des Lesens umfasst; einen Schritt des Zurücksetzens der Leseposition für jeden Benutzer der Tabelle schauender Benutzer, wobei die Leseposition auf einen Wert zurückgesetzt wird, der gleich der Leseposition zum Zeitpunkt des Anhaltens des Lesens ist, wobei auf den Schritt des Zurücksetzens der Leseposition ein Schritt des Änderns des zugewiesenen Platzes folgt, wobei der so geänderte zugewiesene Platz nur den Abschnitt des eindeutigen Multimediainhalts behält, der sich ab der niedrigsten Leseposition von den Lesepositionen in der Benutzertabelle befindet, die dem eindeutigen Multimediainhalt zugeordnet ist.

2. Leseverfahren nach Anspruch 1, **dadurch gekennzeichnet, dass** es einen zweiten Schritt des Identifizierens (L7) wenigstens eines Benutzers während des Lesens des eindeutigen Multimediainhalts umfasst, wobei der Schritt während des Lesens in regelmäßigen Abständen wiederholt wird.

3. Leseverfahren nach Anspruch 2, **dadurch gekennzeichnet, dass** das Verfahren Folgendes umfasst, wenn ein Benutzer, der beim zweiten Schritt (L7) des Identifizierens identifiziert wird, nicht in der Liste schauender Benutzer enthalten ist:
- einen Schritt (L 101) des Anzeigens eines Menüs, das es dem identifizierten Benutzer ermöglicht, die Leseposition, die in der Benutzertabelle enthalten ist, beizubehalten, oder diese Leseposition auf den Wert der aktuellen Leseposition zurückzusetzen; wenn der identifizierte Benutzer auswählt, die Leseposition zurückzusetzen,
- einen Schritt (L 102) des Hinzufügens des Benutzers zur Tabelle der schauenden Benutzer.

4. Leseverfahren nach einem der vorhergehenden Ansprüche, **dadurch gekennzeichnet, dass** es Folgendes umfasst, wenn ein Benutzer der Tabelle schauender Benutzer beim zweiten Schritt (L 7) des Identifizierens nicht identifiziert wird:
- einen Schritt (L 121) des Aktualisierens der Leseposition des Benutzers, wobei die Leseposition auf die aktuelle Leseposition des eindeutigen Multimediainhalts zurückgesetzt wird;
- einen Schritt (L 122) des Löschens des Benutzers aus der Tabelle der schauenden Benutzer.

5. Verfahren nach den Ansprüchen 3 oder 4, **dadurch gekennzeichnet, dass** auf den Schritt des Zurücksetzens der Leseposition Folgendes folgt:
- ein Schritt des Eingebens, durch einen Benutzer, einer ersten Leseposition, Position des tatsächlichen Beginns genannt, und einer zweiten Leseposition, Position des tatsächlichen Endes genannt;
- ein Schritt des Änderns des zugewiesenen Platzes, wobei der so geänderte zugewiesene Platz nur den Abschnitt des eindeutigen Multimediainhalts behält, der sich zwischen der Position des tatsächlichen Beginns und der Position des tatsächlichen Endes befindet.

6. Leseverfahren nach einem der vorhergehenden Ansprüche, **dadurch gekennzeichnet, dass** die Benutzertabelle für jeden Benutzer Folgendes umfasst:
- eine erste Kontextdateninformation in Bezug auf die Leseposition des eindeutigen Multimediainhalts, Lesepositionsdateninformation genannt; und/oder
- eine zweite Kontextdateninformation in Bezug auf die Aufzeichnungsanforderung, Aufzeichnungsanforderungs-Dateninformation genannt, die angibt, ob der Benutzer die Aufzeichnung des eindeutigen Multimediainhalts angefordert hat; und/oder
- eine dritte Kontextdateninformation in Bezug auf die Löschanforderung, Löschanforderungs-Dateninformation genannt, die angibt, ob der Benutzer die Löschung des eindeutigen Multimediainhalts angefordert hat; und/oder eine vierte Kontextdateninformation in Bezug auf die Sperranforderung, Sperranforderungs-Dateninformation genannt, die angibt, ob der Benutzer die Sperrung des eindeutigen Multimediainhalts angefordert hat;
wobei der Schritt (S4) des Erstellens der Benutzertabelle und die Initialisierung der ersten, zweiten, dritten und/oder vierten Kontextdateninformation der Tabelle beim zweiten Schritt (S2) des Hinzufügens eines Eintrags in Bezug auf den eindeutigen Multimediainhalt in der Tabelle der Aufzeichnungen (TR) durchgeführt werden.

7. Leseverfahren nach einem der vorhergehenden Ansprüche, **dadurch gekennzeichnet, dass** das Verfahren Folgendes umfasst, wenn der eindeutige Multimediainhalt beim Schritt (S3) des Erfassens und Speicherns des eindeutigen Multimediainhalts von wenigstens einem Benutzer wiedergegeben wird:
- einen Schritt des Identifizierens des Benutzers;
- beim Anhalten der Wiedergabe des eindeutigen Multimediainhalts, einen Schritt des Aktualisierens der Kontextdateninformationen des Benutzers in der Benutzertabelle, die dem eindeutigen Multimediainhalt zugeordnet ist.

8. Leseverfahren nach einem der vorhergehenden Ansprüche, **dadurch gekennzeichnet, dass** es Folgendes umfasst:
- einen Schritt (E1) des Eingebens eines Befehls zur Löschung eines eindeutigen Multimediainhalts;
- einen Schritt (E2) des Analysierens der Kontextdateninformationen der Benutzertabelle, die dem eindeutigen Multimediainhalt zugeordnet ist;
- einen Schritt (E3) des tatsächlichen Löschens des eindeutigen Multimediainhalts, wobei die Löschung durch den Schritt (E2) des Analysierens der Kontextdateninformationen bedingt ist.

9. Leseverfahren nach dem vorhergehenden Anspruch, **dadurch gekennzeichnet, dass** es vor dem Schritt (E1) des Eingebens eines Löschbefehls einen Schritt (EO) des Identifizierens eines Benutzers umfasst, wobei der Schritt (E1) des Eingebens eines Löschbefehls von dem identifizierten Benutzer durchgeführt wird.

10. Leseverfahren nach dem vorhergehenden Anspruch, **dadurch gekennzeichnet, dass** das Verfahren zwischen dem Schritt (E1) des Eingebens eines Löschbefehls und dem Schritt (E2) des Analysierens der Kontextdateninformationen einen Schritt (E4) des Aktualisierens der Kontextdateninformationen, die dem Benutzer zugeordnet sind, der den Löschbefehl eingegeben hat, in der Benutzertabelle, die dem ausgewählten eindeutigen Multimediainhalt zugeordnet ist, umfasst.

11. Leseverfahren nach dem vorhergehenden Anspruch, **dadurch gekennzeichnet, dass** die Benutzerliste für jeden Benutzer eine oder mehrere Kommunikationsdateninformationen umfasst, die Kommunikationsmitteln entsprechen, und dadurch, dass das Verfahren nach dem Schritt (E2) des Analysierens der Kontextdateninformationen, und wenn ein oder mehrere Benutzer der Benutzertabelle, die dem ausgewählten eindeutigen Multimediainhalt zugeordnet ist, die Löschung nicht angefordert haben und/oder die Sperrung des eindeutigen Multimediainhalts angefordert haben, einen Schritt des Sendens einer Nachricht an die Benutzer mithilfe der Kommunikationsdateninformationen umfasst.

12. Elektronische Vorrichtung (DE) mit einer Datenbank (DB), die eine Benutzerliste und eine Tabelle der Aufzeichnungen (TR) enthält, einem Rechenmittel (MC), einem Mittel zur Erfassung (MA) eines eindeutigen Multimediainhalts und einem Speicherungsmittel (HO), **dadurch gekennzeichnet, dass** die Vorrichtung dazu ausgebildet ist, ein Verfahren nach einem der vorhergehenden Ansprüche durchzuführen.

13. Computerprogrammprodukt, das Anweisungen umfasst, die die Vorrichtung nach dem vorhergehenden Anspruch dazu veranlassen, die Schritte des Verfahrens nach einem der Ansprüche 1 bis 11 auszuführen.

14. Computerlesbarer Datenträger, auf dem das Computerprogramm nach dem vorhergehenden Anspruch gespeichert ist.

## Claims

1. Method for playing back a single multimedia content item by way of an electronic device (DE), said device comprising a database (DB) containing a list of users and a table of recordings (TR) of single multimedia content items, a computing means (MC), an acquisition means (MA) for acquiring the single multimedia content item and a storage means (DB), said storage means (DB) containing at least one multimedia content item stored beforehand in line with the following steps, which are implemented for each stored single multimedia content item:
- a first step (S1) of allocating a storage space on the storage means by way of the computing means (MC);
- a second step (S2) of adding an entry relating to the stored single multimedia content item to the table of recordings (TR);
- a third step (S3) of acquiring the single multimedia content item and of storing said single multimedia content item in the allocated storage space;
- a fourth step (S4) of creating a table of users relating to the stored single multimedia content item, said table of users comprising one or more context data for each user of a subset in the list of users contained in the database (DB),
said storage means (DB) furthermore containing the table of users associated with said single multimedia content item, said playback method being **characterized in that** it comprises:
- a step (L1) of identifying a user;
- a step (L2) of the identified user selecting a single multimedia content item;
- a step (L3) of triggering the playback of the selected single multimedia content item, the playback parameters comprising the context data associated with the identified user and contained in the table of users, the context data comprising the playback position datum, and **in that** the playback parameters from the step (L3) of triggering the playback include the playback position, the step (L3) of triggering the playback being preceded by a step (L4) of creating a table of users who are watching, the identified user being added to said table of users who are watching when said table of users who are watching is created,
and **in that** the identification step (L1) is performed on a plurality of users, and **in that** the selection step (L2) is carried out by one user of the plurality of users, **in that** the identified plurality of users is added to the list of users who are watching and **in that** the playback parameters from the step (L3) of triggering the playback comprise the context data associated with the plurality of identified users and contained in the table of users, and **in that** it comprises a step of stopping the playback, a step of resetting the playback position for each user in the table of users who are watching, the playback position being reset to a value equal to the playback position at the time when the playback is stopped, said step of resetting the playback position being followed by a step of modifying the allocated space, the allocated space thus modified retaining only that part of the single multimedia content item that is located starting from the lowest playback position among the playback positions in the table of users associated with said single multimedia content item.

2. Playback method according to Claim 1, **characterized in that** it comprises a second step of identifying (L7) at least one user during the playback of the single multimedia content item, said step being repeated at regular intervals during the playback.

3. Playback method according to Claim 2, **characterized in that** the method comprises, when a user identified in the second identification step (L7) is not in the list of users who are watching:
- a step (L101) of displaying a menu enabling the identified user to retain the playback position contained in the table of users or to reset this playback position to the value of the current playback position; when the identified user chooses to reset the playback position,
- a step (L102) of adding the user to the table of users who are watching.

4. Playback method according to one of the preceding claims, **characterized in that** it comprises, when a user in the table of users who are watching is not identified in the second identification step (L7):
- a step (L121) of updating the playback position of said user, said playback position being reset to the current playback position of the single multimedia content item;
- a step (L122) of deleting the user from the table of users who are watching.

5. Method according to Claims 3 or 4, **characterized in that** the step of resetting the playback position is followed by:
- a step of a user entering a first playback position, referred to as actual start position, and a second playback position, referred to as actual end position;
- a step of modifying the allocated space, the allocated space thus modified retaining only that part of the single multimedia content item that is located between the actual start position and the actual end position.

6. Playback method according to one of the preceding claims, **characterized in that** the table of users comprises, for each user:
- a first context datum relating to the playback position of the single multimedia content item, referred to as playback position datum; and/or
- a second context datum relating to the recording request, referred to as recording request datum, indicating whether the user has requested to record the single multimedia content item; and/or
- a third context datum relating to the deletion request, referred to as deletion request datum, indicating whether the user has requested to delete the single multimedia content item; and/or a fourth context datum relating to the locking request, referred to as locking request datum, indicating whether the user has requested to lock the single multimedia content item;
the step (S4) of creating the table of users and the resetting of the first, second, third and/or fourth context data in said table being implemented in the second step (S2) of adding an entry relating to the single multimedia content item in the table of recordings (TR).

7. Playback method according to one of the preceding claims, **characterized in that** the method comprises, when the single multimedia content item is currently being viewed by at least one user in the step (S3) of acquiring and storing said single multimedia content item:
- a step of identifying the user;
- when said single multimedia content item stops being viewed, a step of updating the context data of said user in the table of users associated with said single multimedia content item.

8. Playback method according to one of the preceding claims, **characterized in that** it comprises:
- a step (E1) of entering an order to delete a single multimedia content item;
- a step (E2) of analysing the context data in the table of users associated with said single multimedia content item;
- a step (E3) of actually deleting the single multimedia content item, said deletion being conditional on the step (E2) of analysing the context data.

9. Playback method according to the preceding claim, **characterized in that** it comprises, before the step (E1) of entering a deletion order, a step (EO) of identifying a user, the step (E1) of entering a deletion order being performed by the identified user.

10. Playback method according to the preceding claim, **characterized in that** the method comprises, between the step (E1) of entering a deletion order and the step (E2) of analysing the context data, a step (E4) of updating the context data associated with the user who entered the deletion order in the table of users associated with the selected single multimedia content item.

11. Playback method according to the preceding claim, **characterized in that** the list of users comprises, for each user, one or more communication data corresponding to communication means and **in that** the method comprises, after the step (E2) of analysing the context data and when one or more users in the table of users associated with the selected single multimedia content item have not requested to delete and/or have requested to lock said single multimedia content item, a step of sending a message to said users using said communication data.

12. Electronic device (DE) comprising a database (DB) containing a list of users and a table of recordings (TR), a computing means (MC), an acquisition means (MA) for acquiring a single multimedia content item and a storage means (HO), **characterized in that** the device is configured to implement a method according to one of the preceding claims.

13. Computer program product comprising instructions that cause the device according to the preceding claim to carry out the steps of the method according to one of Claims 1 to 11.

14. Computer-readable medium on which the computer program according to the preceding claim is recorded.
